# EUROPEAN PATENT APPLICATION

(11) **EP 3 902 342 A1**
(43) Date of publication of application: **27.10.2021**
(21) Application number: 19914878.4
(22) Date of filing: 15.02.2019
(51) Int. Cl.: H04W 72/00

(54) **DATA SCHEDULING METHOD, APPARATUS, AND SYSTEM**

(71) Applicant: Huawei Technologies Co., Ltd., Longgang District, Shenzhen, Guangdong 518129, (CN)
(72) Inventor: LUO, Zhihu, Shenzhen, Guangdong 518129 (CN); LI, Jun, Shenzhen, Guangdong 518129 (CN); CHENG, Xingqing, Shenzhen, Guangdong 518129 (CN); JIN, Zhe, Shenzhen, Guangdong 518129 (CN)
(74) Representative: Pfenning, Meinig & Partner mbB
(86) International application number: PCT/CN2019/075221
(87) International publication number: WO 2020/164109

(57) **Abstract**

Embodiments of this application provide a data scheduling method, an apparatus, and a system, and may provide a DCI design supporting multi-TB scheduling. In this solution, a terminal device and a network device each determine a quantity M of hybrid automatic repeat request HARQ processes supported by the terminal device. The network device sends downlink control information DCI to the terminal device, and the terminal device receives the DCI from the network device. The DCI includes a first field, the first field indicates a quantity N of transport blocks TBs scheduled by the DCI, and N is a positive integer greater than 1. If M=1, the terminal device receives or sends, in the HARQ process supported by the terminal device, an initially transmitted TB and/or a retransmitted TB in the N TBs scheduled by the DCI. Alternatively, if M is greater than 1, and N is less than or equal to M, the terminal device receives or sends, in N HARQ processes in the M HARQ processes supported by the terminal device, the N TBs scheduled by the DCI, where each of the N HARQ processes corresponds to one TB in the N TBs.

## Description

### TECHNICAL FIELD

This application relates to the communications field, and in particular, to a data scheduling method, an apparatus, and a system.

### BACKGROUND

Before a release (release, Rel) 16 narrowband internet of things (narrow band internet of thing, NB-IoT) system, one piece of downlink control information (downlink control information, DCI) is allowed to schedule one transport block (transport block, TB). A DCI format used for uplink scheduling is a DCI format (format) N0. For a single hybrid automatic repeat request (hybrid automatic repeat request, HARQ) process (single HARQ for short below), content and a quantity of bits of the DCI format N0 are shown in Table 1. A 1-bit flag for format N0/format N1 differentiation field (which may also be referred to as a field) is used to indicate whether a specific format of the DCI is the format N0 or a format N1. A 6-bit subcarrier indication field is used to indicate a frequency domain resource position. A 3-bit resource assignment field is used to indicate scheduling resource assignment. A 2-bit scheduling delay field is used to determine an end moment of DCI transmission to a start moment of narrowband physical uplink shared channel (narrowband physical uplink shared channel, NPUSCH) transmission corresponding to the TB scheduled by the DCI. A 4-bit modulation and coding scheme (modulation and coding scheme, MCS) field is used to indicate a modulation order. A 1-bit redundancy version (redundancy version, RV) field is used to indicate an RV corresponding to the TB scheduled by the DCI. A 3-bit repetition number field is used to indicate a repetition number used for transmission of the TB scheduled by using the DCI. A 1-bit new data indicator (new data indicator, NDI) field is used to indicate whether currently scheduled transmission is initial transmission or retransmission. A 2-bit DCI repetition number field is used to indicate a repetition number of the DCI.

**Table 1**

| Content | Quantity of bits [bits] |
|---|---|
| Flag for format N0/format N1 differentiation | 1 |
| Subcarrier indication | 6 |
| Resource assignment | 3 |
| Scheduling delay | 2 |
| MCS | 4 |
| RV | 1 |
| Repetition number | 3 |
| NDI | 1 |
| DCI repetition number | 2 |

A DCI format used for downlink scheduling is a DCI format N1. For the single HARQ, content and a quantity of bits of the DCI format N1 are shown in Table 2. The 1-bit flag for format NO/format N1 differentiation field is used to indicate whether a specific format of the DCI is the format N0 or the format N1. A 1-bit narrowband physical downlink control channel (narrowband physical downlink control channel, NPDCCH) field is used to indicate whether current DCI scheduling is random access triggered by an NPDCCH order (NPDCCH order). A 3-bit scheduling delay field is used to determine the end moment of the DCI transmission to a start moment of narrowband physical downlink shared channel (narrowband physical downlink shared channel, NPDSCH) transmission corresponding to the TB scheduled by the DCI. The 3-bit resource assignment field is used to indicate scheduling resource assignment. The 4-bit MCS field is used to indicate the modulation order. A 4-bit repetition number field is used to indicate a repetition number used for transmission of the TB scheduled by the DCI. The 1-bit NDI field is used to indicate whether the currently scheduled transmission is initial transmission or retransmission. A 4-bit HARQ-acknowledgement (acknowledgement, ACK) resource field is used to indicate a resource position for HARQ feedback transmission. The 2-bit DCI repetition number field is used to indicate the repetition number of the DCI.

**Table 2**

| Content | Quantity of bits [bits] |
|---|---|
| Flag for format N0/format N1 differentiation | 1 |
| NPDCCH order indicator | 1 |
| Scheduling delay | 3 |
| Resource assignment | 3 |
| MCS | 4 |
| Repetition number | 4 |
| NDI | 1 |
| HARQ-ACK resource | 4 |
| DCI repetition number | 2 |

For the single HARQ, only one piece of DCI in the DCI format N0 is required for the uplink scheduling, only one piece of DCI in the DCI format N1 is also required for the downlink scheduling, and each piece of DCI schedules only one TB. For two HARQ processes (two HARQs for short below), when two HARQs are used, two pieces of DCI in the DCI format N0 are required for the uplink scheduling, and two pieces of DCI in the DCI format N1 are required for the downlink scheduling. Each piece of DCI also schedules only one TB, and each piece of DCI further includes a 1-bit HARQ process number field, used to indicate a HARQ process identifier.

However, a scheduling enhancement feature is introduced in Rel-16 of the NB-IoT system, and one piece of DCI is allowed to schedule a plurality of TBs. Therefore, scheduling information of the plurality of TBs needs to be carried in the DCI. A DCI format before Rel-16 of the NB-IoT system is not applicable.

### SUMMARY

Embodiments of this application provide a data scheduling method, an apparatus, and a system, and may provide a DCI design supporting multi-TB scheduling.

To achieve the foregoing objective, the following technical solutions are used in the embodiments of this application.

According to a first aspect, a data scheduling method and a corresponding communications apparatus are provided. In this solution, a terminal device determines a quantity M of hybrid automatic repeat request HARQ processes supported by the terminal device, where M is a positive integer. The terminal device receives downlink control information DCI from a network device, where the DCI includes a first field, the first field indicates a quantity N of transport blocks TBs scheduled by the DCI, and N is a positive integer greater than 1. If M=1, the terminal device receives or sends, in the HARQ process supported by the terminal device, an initially transmitted TB and/or a retransmitted TB in the N TBs scheduled by the DCI. Alternatively, if M is greater than 1, and N is less than or equal to M, the terminal device receives or sends, in N HARQ processes in the M HARQ processes supported by the terminal device, the N TBs scheduled by the DCI, where each of the N HARQ processes corresponds to one TB in the N TBs. This solution provides a DCI design supporting multi-TB scheduling. When one piece of DCI schedules a plurality of TBs, the DCI in this embodiment of this application includes the first field used to indicate the quantity of TBs scheduled by the DCI, and the terminal device may determine the quantity of HARQ processes supported by the terminal device, and further perform uplink or downlink scheduling based on the quantity of TBs scheduled by the DCI and the quantity of HARQ processes supported by the terminal device. Therefore, scheduling of the plurality of TBs can be implemented.

In a possible design, if M=1, the DCI further includes a second field, where the second field indicates a transmission type of each of the TBs scheduled by the DCI. That the terminal device receives or sends, in the HARQ process supported by the terminal device, an initially transmitted TB and/or a retransmitted TB in the N TBs scheduled by the DCI includes: The terminal device receives or sends, based on the second field in the HARQ process supported by the terminal device, the retransmitted TB in the TBs scheduled by the DCI. Alternatively, the terminal device receives or sends, based on the second field in the HARQ process supported by the terminal device, the N initially transmitted TBs scheduled by the DCI. Based on this solution, retransmission or initial transmission of a TB in a single HARQ scenario can be implemented.

Optionally, each of bits occupied by the second field corresponds to one TB in the N TBs scheduled by the DCI, and is used to indicate a transmission type of the corresponding TB.

In a possible design, if M=1, the DCI further includes a third field, where the third field indicates a new data indicator NDI corresponding to each of the N TBs scheduled by the DCI. That the terminal device receives or sends, in the HARQ process supported by the terminal device, an initially transmitted TB and/or a retransmitted TB in the N TBs scheduled by the DCI includes: The terminal device receives or sends, based on the third field in the HARQ process supported by the terminal device, the N TBs scheduled by the DCI. Based on this solution, scheduling of the plurality of TBs in a single HARQ scenario can be implemented.

Optionally, each of bits occupied by the third field corresponds to one TB in the N TBs scheduled by the DCI, and is used to indicate an NDI corresponding to the corresponding TB.

In a possible design, if M is greater than 1, and N is less than or equal to M, the DCI further includes a fourth field, where the fourth field indicates a new data indicator NDI corresponding to each of the N HARQ processes. That the terminal device receives or sends, in the N HARQ processes, the N TBs scheduled by the DCI includes: The terminal device receives or sends, based on the fourth field in the N HARQ processes, the N TBs scheduled by the DCI. Based on this solution, scheduling of the N TBs in a multi-HARQ process scenario can be implemented.

Optionally, each of bits occupied by the fourth field corresponds to one HARQ process in the N HARQ processes, and is used to indicate an NDI corresponding to the corresponding HARQ process.

According to a second aspect, a data scheduling method and a corresponding communications apparatus are provided. In this solution, a network device determines a quantity M of hybrid automatic repeat request HARQ processes supported by a terminal device, where M is a positive integer. The network device sends downlink control information DCI to the terminal device, where the DCI includes a first field, the first field indicates a quantity N of transport blocks TBs scheduled by the DCI, and N is a positive integer greater than 1. If M=1, the network device sends or receives, in the HARQ process supported by the terminal device, an initially transmitted TB and/or a retransmitted TB in the N TBs scheduled by the DCI. Alternatively, if M is greater than 1, and N is less than or equal to M, the network device sends or receives, in N HARQ processes in the M HARQ processes supported by the terminal device, the N TBs scheduled by the DCI, where each of the N HARQ processes corresponds to one TB in the N TBs. For technical effects brought by the second aspect, refer to technical effects brought by the first aspect. Details are not described herein again.

In a possible design, if M=1, the DCI further includes a second field, where the second field indicates a transmission type of each of the TBs scheduled by the DCI. That the network device sends or receives, in the HARQ process supported by the terminal device, an initially transmitted TB and/or a retransmitted TB in the N TBs scheduled by the DCI includes: The network device sends or receives, based on the second field in the HARQ process supported by the terminal device, the retransmitted TB in the TBs scheduled by the DCI. Alternatively, the network device sends or receives, based on the second field in the HARQ process supported by the terminal device, the N initially transmitted TBs scheduled by the DCI.

Optionally, each of bits occupied by the second field corresponds to one TB in the N TBs scheduled by the DCI, and is used to indicate a transmission type of the corresponding TB.

In a possible design, if M=1, the DCI further includes a third field, where the third field indicates a new data indicator NDI corresponding to each of the N TBs scheduled by the DCI. That the network device sends or receives, in the HARQ process supported by the terminal device, an initially transmitted TB and/or a retransmitted TB in the N TBs scheduled by the DCI includes: The network device sends or receives, based on the third field in the HARQ process supported by the terminal device, the N TBs scheduled by the DCI.

Optionally, each of bits occupied by the third field corresponds to one TB in the N TBs scheduled by the DCI, and is used to indicate an NDI corresponding to the corresponding TB.

In a possible design, if M is greater than 1, and N is less than or equal to M, the DCI further includes a fourth field, where the fourth field indicates a new data indicator NDI corresponding to each of the N HARQ processes.

That the network device receives or sends, in the N HARQ processes, the N TBs scheduled by the DCI includes: The network device receives or sends, based on the fourth field in the N HARQ processes, the N TBs scheduled by the DCI.

Optionally, each of bits occupied by the fourth field corresponds to one HARQ process in the N HARQ processes, and is used to indicate an NDI corresponding to the corresponding HARQ process.

For technical effects brought by any design manner of the second aspect, refer to technical effects brought by different design manners of the first aspect. Details are not described herein again.

With reference to the first aspect or the second aspect, in a possible design, the DCI is used for uplink scheduling. The DCI further includes a fifth field, where the fifth field is used to indicate a first redundancy version corresponding to the retransmitted TB. In other words, in this solution, the first redundancy version corresponding to the retransmitted TB is indicated by using the DCI.

Optionally, a redundancy version corresponding to the initially transmitted TB is a specified second redundancy version, and the first redundancy version is different from the second redundancy version. That is, in this solution, the redundancy version corresponding to the initially transmitted TB is preset.

With reference to the first aspect or the second aspect, in a possible design, the DCI is used for uplink scheduling. A redundancy version corresponding to the retransmitted TB is a specified first redundancy version. A redundancy version corresponding to the initially transmitted TB is a set second redundancy version, and the first redundancy version is different from the second redundancy version. In other words, in this solution, both the redundancy version corresponding to the retransmitted TB and the redundancy version corresponding to the initially transmitted TB may be preset. In this way, a 1-bit RV field may be further saved in a DCI design.

With reference to the first aspect or the second aspect, in a possible design, the DCI further includes a sixth field and a seventh field, where the sixth field is used to indicate scheduling resource assignment, and the seventh field is used to indicate a modulation order. If M=1, the sixth field occupies X1 bits, and the seventh field occupies Y1 bits; or if M is greater than 1, and N is less than or equal to M, the sixth field occupies X2 bits, and the seventh field occupies Y2 bits. X1 is less than X2, and Y1 is equal to Y2; X1 is equal to X2, and Y1 is less than Y2; or X1 is less than X2, and Y1 is less than Y2. X1, X2, Y1, and Y2 are all positive integers. Based on this solution, for a single HARQ process (that is, M=1), when the quantity of TBs is greater than 1, a quantity of bits of at least one field in the sixth field or the seventh field in the DCI may be further reduced.

According to a third aspect, a communications apparatus is provided, and is configured to implement the foregoing methods. The communications apparatus may be the terminal device in the first aspect, or an apparatus including the terminal device. Alternatively, the communications apparatus may be the network device in the second aspect, or an apparatus including the network device. The communications apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

According to a fourth aspect, a communications apparatus is provided, and includes a processor and a memory. The memory is configured to store computer instructions. When the processor executes the instructions, the communications apparatus is enabled to perform the method according to any one of the foregoing aspects. The communications apparatus may be the terminal device in the first aspect, or an apparatus including the terminal device. Alternatively, the communications apparatus may be the network device in the second aspect, or an apparatus including the network device.

According to a fifth aspect, a communications apparatus is provided, and includes a processor. The processor is configured to: be coupled to a memory, and after reading instructions in the memory, perform the method according to any one of the foregoing aspects according to the instructions. The communications apparatus may be the terminal device in the first aspect, or an apparatus including the terminal device. Alternatively, the communications apparatus may be the network device in the second aspect, or an apparatus including the network device.

According to a sixth aspect, a computer-readable storage medium is provided. The computer-readable storage medium stores instructions. When the instructions are run on a computer, the computer is enabled to perform the data information generation method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a communications apparatus (for example, the communications apparatus may be a chip or a chip system) is provided. The communications apparatus includes a processor, configured to implement the function in any one of the foregoing aspects. In a possible design, the communications apparatus further includes a memory. The memory is configured to store program instructions and data that are necessary. When the communications apparatus is the chip system, the communications apparatus may include a chip, or may include a chip and another discrete component.

For technical effects brought by any one of the design manners of the third aspect to the eighth aspect, refer to technical effects brought by different design manners of the first aspect or the second aspect. Details are not described herein again.

According to a ninth aspect, a communications system is provided. The communications system includes the terminal device in the foregoing aspects and the network device in the foregoing aspects.

### BRIEF DESCRIPTION OF DRAWINGS

FIG. 1a is a schematic diagram of current Rel-13 NB-IoT downlink scheduling with a single HARQ;
FIG. 1b is a schematic diagram of current Rel-13 NB-IoT uplink scheduling with a single HARQ;
FIG. 1c is a schematic diagram of current Rel-14 NB-IoT downlink scheduling with two HARQs;
FIG. 1d is a schematic diagram of current Rel-14 NB-IoT uplink scheduling with two HARQs;
FIG. 1e is a schematic diagram of current Rel-16 NB-IoT downlink scheduling with two HARQs;
FIG. If is a schematic diagram of current Rel-16 NB-IoT uplink scheduling with two HARQs;
FIG. 2 is a schematic architectural diagram of a communications system according to an embodiment of this application;
FIG. 3 is a schematic structural diagram of a terminal device and a network device according to an embodiment of this application;
FIG. 4 is another schematic structural diagram of a terminal device according to an embodiment of this application;
FIG. 5 is a schematic flowchart 1 of a data scheduling method according to an embodiment of this application;
FIG. 6a is a schematic diagram 1 of downlink scheduling according to an embodiment of this application;
FIG. 6b is a schematic diagram 2 of downlink scheduling according to an embodiment of this application;
FIG. 6c is a schematic diagram 3 of downlink scheduling according to an embodiment of this application;
FIG. 6d is a schematic diagram 4 of downlink scheduling according to an embodiment of this application;
FIG. 7a is a schematic diagram 5 of downlink scheduling according to an embodiment of this application;
FIG. 7b is a schematic diagram 6 of downlink scheduling according to an embodiment of this application;
FIG. 8 is a schematic flowchart 2 of a data scheduling method according to an embodiment of this application;
FIG. 9a is a schematic diagram 1 of uplink scheduling according to an embodiment of this application;
FIG. 9b is a schematic diagram 2 of uplink scheduling according to an embodiment of this application;
FIG. 9c is a schematic diagram 3 of uplink scheduling according to an embodiment of this application;
FIG. 9d is a schematic diagram 4 of uplink scheduling according to an embodiment of this application;
FIG. 10a is a schematic diagram 5 of uplink scheduling according to an embodiment of this application;
FIG. 10b is a schematic diagram 6 of uplink scheduling according to an embodiment of this application;
FIG. 11 is still another schematic structural diagram of a terminal device according to an embodiment of this application; and
FIG. 12 is still another schematic structural diagram of a network device according to an embodiment of this application.

### DESCRIPTION OF EMBODIMENTS

For ease of understanding of technical solutions in embodiments of this application, the following first briefly describes technologies or nouns related to this application.

### First, IoT:

IoT is an "internet in which things are interconnected". A user end of the internet is extended to any object through the IoT, so that information exchange and communication can be carried out between any objects. Such communication manner is also referred to as machine type communication (machine type communications, MTC). A communication node is referred to as an MTC terminal or an MTC device. Typical IoT applications include a smart grid, smart agriculture, smart transportation, smart household, environment detection, and the like.

The internet of things needs to be applied to a plurality of scenarios, for example, from outdoor to indoor, and from overground to underground. Therefore, many special requirements are imposed on a design of the internet of things. For example, an MTC terminal in some scenarios is used in an environment with poor coverage. For example, a water meter or an electric meter is usually mounted indoors, even in a basement, or other places with poor wireless network signals. Therefore, a coverage enhancement technology is required to resolve this problem. Alternatively, a quantity of MTC terminals in some scenarios is far greater than a quantity of devices for human-to-human communication, in other words, large-scale deployment is required. Therefore, the MTC terminal needs to be obtained and used at very low costs. Alternatively, a data packet transmitted by an MTC terminal in some scenarios is quite small, and is insensitive to a delay. Therefore, it is required that an MTC terminal with a low rate be supported. Alternatively, in most cases, the MTC terminal is powered by using a battery. However, in many scenarios, the MTC terminal needs to be used for more than 10 years without replacing the battery. Therefore, the MTC terminal needs to work with very low power consumption.

To satisfy the above requirements, the mobile communications standards organization 3GPP adopted a new research project at the RAN #62 conference to study a method for supporting the IoT with very low complexity and low costs in a cellular network, and initiated the research project as an NB-IoT project at the RAN #69 conference.

### Second, HARQ:

The HARQ is a technology combining a forward error correction (forward error correction, FEC) method and an automatic repeat request (ARQ) method. FEC enables a receive end to correct some errors by adding redundant information, thereby reducing a quantity of retransmissions. For an error that cannot be corrected by using the FEC, the receive end requests, in an ARQ mechanism, a transmit end to resend a TB. The receive end uses an error-detection code, namely, a cyclic redundancy check (cyclic redundancy check, CRC), to detect whether an error occurs in the received TB. If the receive end does not detect an error, the receive end sends an ACK to the transmit end, and after receiving the ACK, the transmit end sends a next TB. Alternatively, if the receive end detects an error, the receive end sends a negative acknowledgement (negative acknowledgement, NACK) to the transmit end, and after receiving the NACK, the transmit end resends the previous TB to the receive end.

A HARQ protocol exists at both the transmit end and the receive end, and HARQ operations at the transmit end include sending and retransmitting a TB, receiving and processing an ACK or a NACK, and the like. HARQ operations at the receive end include receiving a TB, generating an ACK or a NACK, and the like.

In addition, the HARQ is classified into an uplink HARQ and a downlink HARQ. The downlink HARQ is for a TB carried on a downlink shared channel (downlink shared channel, DL-SCH), and the uplink HARQ is for a TB carried on an uplink shared channel (uplink shared channel, DL-SCH). Specifically, the uplink HARQ is a processing procedure of acknowledging and retransmitting a TB sent by a terminal device to a network device. The downlink HARQ is a processing procedure of acknowledging and retransmitting a TB sent by the network device to the terminal device. The data scheduling method provided in the embodiments of this application mainly relates to the downlink HARQ.

### Third, a scheduling manner of Rel-13/Rel-14/Rel-15 NB-IoT is as follows:

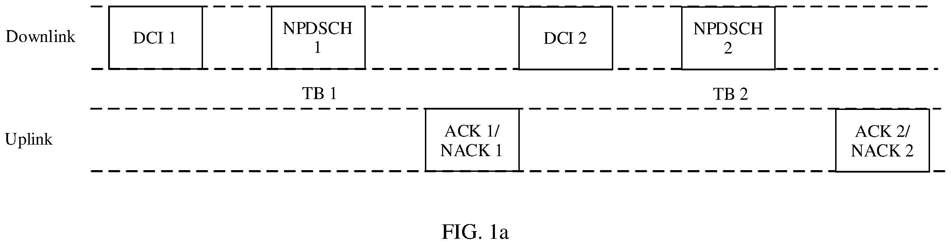

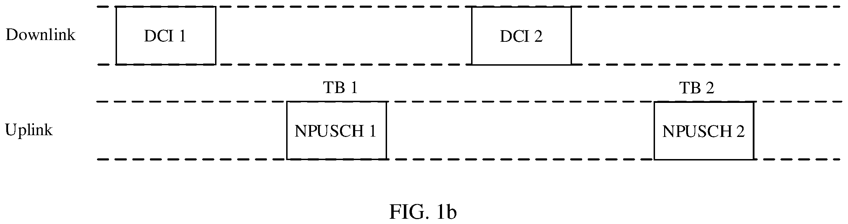

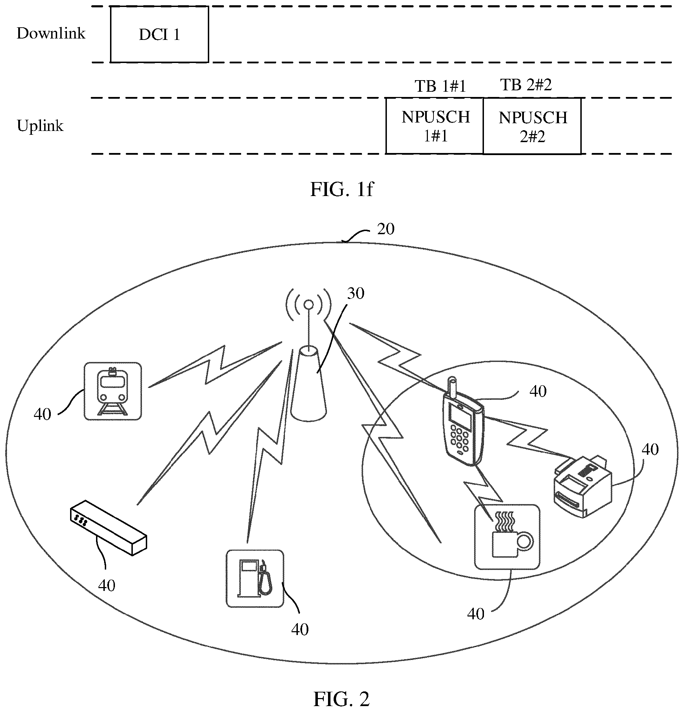

Rel-13 NB-IoT supports only a single HARQ, namely, one HARQ process. FIG. 1a and FIG. 1b show downlink and uplink scheduling of single HARQ respectively. For downlink, when two TBs, such as a TB 1 and a TB 2, need to be transmitted, the TB 1 is carried on an NPDSCH 1, and the TB 2 is carried on an NPDSCH 2. Only after a terminal device receives the TB 1 based on scheduling information of DCI 1 and sends an ACK 1/NACK 1 feedback corresponding to the TB 1 to a network device, the terminal device can continue to receive DCI 2. Then, based on scheduling information of the DCI 2, the terminal device receives the TB 2 and sends an ACK 2/NACK 2 feedback corresponding to the TB 2. For uplink, when two TBs, such as a TB 1 and a TB 2, need to be transmitted, the TB 1 is carried on an NPUSCH 1, and the TB 2 is carried on an NPUSCH 2. A terminal device can continue to receive DCI 2 only after sending the TB 1, and then the terminal device sends the TB 2 based on scheduling information of the DCI 2.

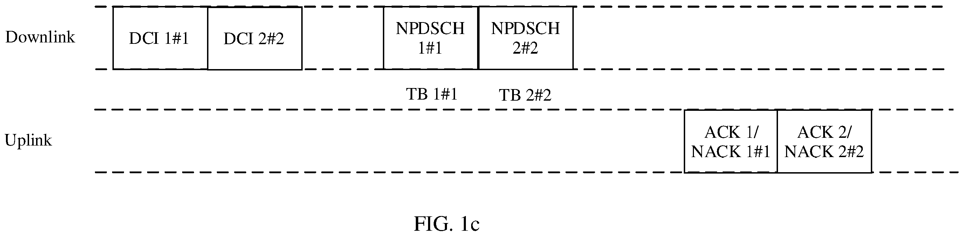

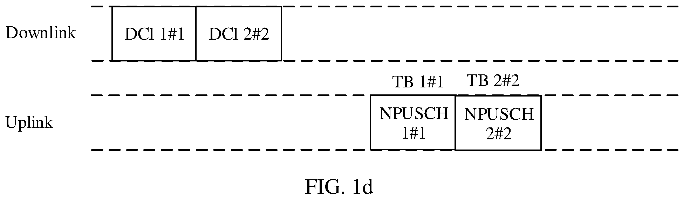

Two HARQs are introduced in Rel-14 NB-IoT. FIG. 1c and FIG. 1d show typical downlink and uplink scheduling of two HARQs respectively. The two HARQs are scheduled by using two independent pieces of DCI. "#1" in suffixes marked in FIG. 1c, FIG. 1d, and subsequent drawings indicates a HARQ process 1, and "#2" indicates a HARQ process 2. This is uniformly described herein. It can be learned from FIG. 1c and FIG. 1d that, by introducing the two HARQs, the terminal device may first receive the two pieces of DCI for downlink or uplink, and then receive a downlink TB or send an uplink TB. Compared with the single HARQ, a time sequence is more compact in scheduling two HARQs. Two TBs can be transmitted in a shorter time in scheduling two HARQs than in scheduling the single HARQ. Therefore, a higher rate can be achieved.

### Fourth, a scheduling manner of Rel-16 NB-IoT is as follows:

A scheduling enhancement feature is introduced in Rel-16 NB-IoT, and one piece of DCI is allowed to be used to schedule a plurality of TBs. Currently, a relationship between a HARQ process and a TB is not determined in a standard. One or both of the following relationships may be determined to be supported.

Relationship 1: One HARQ process corresponds to one TB.

Relationship 2: One HARQ process corresponds to a maximum of two TBs.

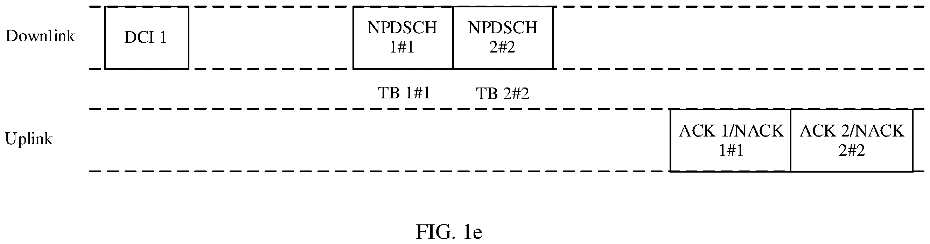

For single HARQ transmission, because there is only one HARQ process, if a manner of the relationship 1 is used, it means that for the single HARQ, one TB is scheduled by one piece of DCI. In this case, the scheduling manner is the same as the scheduling manner of Rel-13/Rel-14/Rel-15, and DCI overheads cannot be reduced. For two HARQs, because there are two HARQ processes, if the relationship 1 is used, one piece of DCI is used to schedule the two HARQ processes, and each TB corresponds to one HARQ process. This can reduce DCI resource overheads compared with that one piece of DCI is used to schedule one TB in Rel-14. Schematic diagrams of scheduling two TBs by using one piece of DCI in downlink and uplink scheduling of two HARQs are shown in FIG. 1e and FIG. If respectively. For downlink, a terminal device can continue to receive subsequent DCI only after the terminal device receives, based on scheduling information of DCI 1, a TB 1 carried on an NPDSCH 1 and a TB 2 carried on an NPDSCH 2, and sends an ACK 1/NACK 1 feedback corresponding to the TB 1 and an ACK 2/NACK 2 feedback corresponding to the TB 2 to the network device. The TB 1 corresponds to a HARQ process 1, and the TB 2 corresponds to a HARQ process 2. For uplink, a terminal device can continue to receive subsequent DCI only after the terminal device sends, based on scheduling information of the DCI 1, a TB 1 carried on an NPUSCH 1 and a TB 2 carried on an NPUSCH 2. The TB 1 corresponds to a HARQ process 1, and the TB 2 corresponds to a HARQ process 2.

The following describes technical solutions in embodiments of this application with reference to accompanying drawings in the embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of the items, including any combination of one item (piece) or a plurality of items (pieces). For example, at least one of a, b, or c may indicate: a, b, c, a and b, a and c, b and c, or a, b, and c, where a, b, and c may be singular or plural. In addition, to clearly describe the technical solutions in the embodiments of this application, terms such as "first" and "second" are used in the embodiments of this application to distinguish between same items or similar items that have basically same functions and purposes. A person skilled in the art may understand that the terms such as "first" and "second" do not constitute a limitation on a quantity or an execution sequence, and that the terms such as "first" and "second" do not indicate a definite difference. In addition, in the embodiments of this application, a word such as "example" or "for example" is used to represent giving an example, an illustration, or a description. Any embodiment or design scheme described as an "example" or "for example" in the embodiments of this application should not be explained as being preferable or having more advantages than another embodiment or design scheme. Exactly, use of the word such as "example" or "for example" is intended to present a relative concept in a specific manner for ease of understanding.

The embodiments of this application are applicable to an LTE system such as an NB-IoT system, or are applicable to another wireless communications system, such as a global system for mobile communications (global system for mobile communication, GSM), a mobile communications system (universal mobile telecommunications system, UMTS), a code division multiple access (code division multiple access, CDMA) system, a wideband code division multiple access (wideband code division multiple access, WCDMA) system, or a new future-oriented network device system. This is not specifically limited in the embodiments of this application. The foregoing communications systems applicable to this application are merely examples for description, and communications systems applicable to this application are not limited thereto. This is uniformly described herein, and details are not described herein again. In addition, the terms "system" and "network" may be interchanged.

FIG. 2 shows a communications system 20 according to an embodiment of this application. The communications system 20 includes a network device 30 and one or more terminal devices 40 connected to the network device 30. Optionally, different terminal devices 40 may communicate with each other.

For example, the network device 30 shown in FIG. 2 interacts with any terminal device 40. In this embodiment of this application, the network device 30 sends DCI to the terminal device 40, where the DCI includes a first field, the first field indicates a quantity N of transport blocks TBs scheduled by the DCI, and N is a positive integer greater than 1. The network device 30 determines a quantity M of HARQ processes supported by the terminal device 40, where M is a positive integer. The terminal device 40 receives the DCI from the network device 30, and the terminal device 40 determines the quantity M of HARQ processes supported by the terminal device 40. If M=1, the terminal device 40 receives or sends, in the HARQ process supported by the terminal device 40, the N TBs scheduled by the DCI. The network device 30 sends or receives, in the HARQ process supported by the terminal device 40, the N TBs scheduled by the DCI. Alternatively, if M is greater than 1, and N is less than or equal to M, the terminal device 40 receives or sends, in N HARQ processes in the M HARQ processes supported by the terminal device 40, the N TBs scheduled by the DCI. The network device 3 sends or receives, in the N HARQ processes in the M HARQ processes supported by the terminal device 40, the N TBs scheduled by the DCI, where each of the N HARQ processes corresponds to one TB in the N TBs. A specific implementation of this solution is described in detail in a subsequent method embodiment. Details are not described herein. This solution provides a DCI design supporting multi-TB scheduling. When one piece of DCI schedules a plurality of TBs, the DCI in this embodiment of this application includes the first field used to indicate the quantity of TBs scheduled by the DCI, and the terminal device and the network device may determine the quantity of HARQ processes supported by the terminal device, and further perform uplink or downlink scheduling based on the quantity of TBs scheduled by the DCI and the quantity of HARQ processes supported by the terminal device. Therefore, scheduling of the plurality of TBs can be implemented.

It should be noted that in this embodiment of this application, for downlink, receiving or sending a TB scheduled by the DCI may also be understood as receiving or sending a downlink channel carrying the TB scheduled by the DCI. The downlink channel may be, for example, an NPDSCH. For uplink, receiving or sending a TB scheduled by the DCI may also be understood as receiving or sending an uplink channel carrying the TB scheduled by the DCI. The uplink channel may be, for example, an NPUSCH. This is uniformly described herein, and details are not described herein again.

It should be noted that the DCI in this embodiment of this application also supports scheduling of one TB. When the DCI schedules one TB, a scheduling manner may use a conventional technology. This is uniformly described herein, and details are not described herein again.

Optionally, the network device 30 in this embodiment of this application is a device for connecting the terminal device 40 to a wireless network, and may be an evolved NodeB (evolutional Node B, eNB, or eNodeB) in long term evolution (long term evolution, LTE), a base transceiver station (base Transceiver Station BTS) in GSM or CDMA, a NodeB (NodeB) in a WCDMA system, a base station in a 5th generation (5th generation, 5G) network or future evolved public land mobile network (public land mobile network, PLMN), a broadband network gateway (broadband network gateway, BNG), an aggregation switch, a 3rd generation partnership project (3rd generation partnership project, 3GPP) access device, or the like. This is not specifically limited in this embodiment of this application. Optionally, the base station in this embodiment of this application may include base stations in various forms, for example, a macro base station, a micro base station (which is also referred to as a small cell), a relay station, and an access point. This is not specifically limited in this embodiment of this application.

Optionally, the terminal device 40 in this embodiment of this application may be a device, such as a terminal or a chip that may be used in the terminal, configured to implement a wireless communication function. The terminal may be user equipment (user equipment, UE), an access terminal, a terminal unit, a terminal station, a mobile station, a mobile console, a remote station, a remote terminal, a mobile device, a wireless communications device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or in a fixed position.

Optionally, the network device 30 and the terminal device 40 in this embodiment of this application may also be referred to as communications apparatuses, and each may be a general-purpose device or a dedicated device. This is not specifically limited in this embodiment of this application.

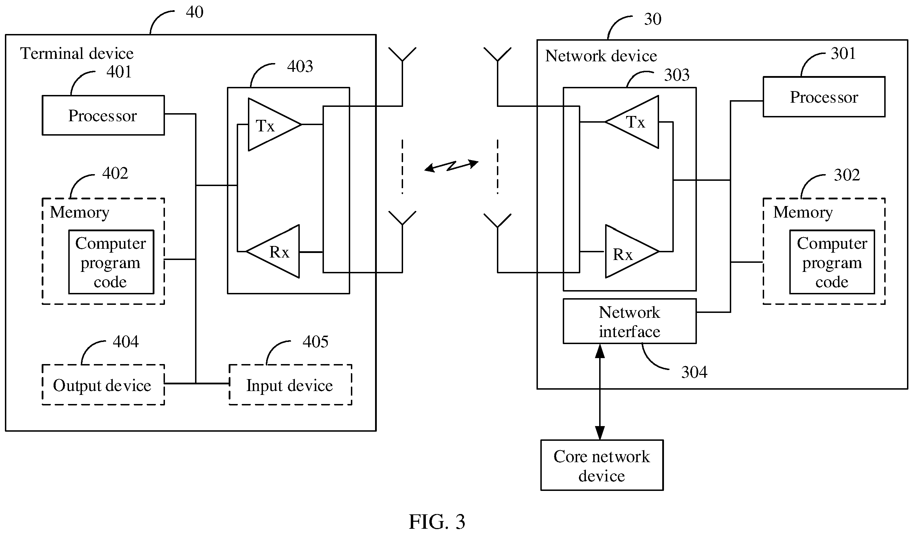

Optionally, FIG. 3 is a schematic structural diagram of the network device 30 and the terminal device 40 according to this embodiment of this application.

The terminal device 40 includes at least one processor (an example in which the terminal device 40 includes one processor 401 is used for description in FIG. 3) and at least one transceiver (an example in which the terminal device 40 includes one transceiver 403 is used for description in FIG. 3). Optionally, the terminal device 40 may further include at least one memory (an example in which the terminal device 40 includes one memory 402 is used for description in FIG. 3), at least one output device (an example in which the terminal device 40 includes one output device 404 is used for description in FIG. 3), and at least one input device (an example in which the terminal device 40 includes one input device 405 is used for description in FIG. 3).

The processor 401, the memory 402, and the transceiver 403 are connected through a communications line. The communication line may include a path transmitting information between the foregoing components.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application. In a specific implementation, in an embodiment, the processor 401 may alternatively include a plurality of CPUs, and the processor 401 may be a single-core (single-CPU) processor or a multi-core (multi-CPU) processor. The processor herein may refer to one or more devices, circuits, and/or processing cores configured to process data (for example, computer program instructions).

The memory 402 may be an apparatus having a storage function. For example, the memory 402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other computer-accessible medium that can be used to carry or store desired program code in instructions or data structure form, but is not limited thereto. The memory 402 may exist independently, and is connected to the processor 401 through the communication line. The memory 402 may alternatively be integrated with the processor 401.

The memory 402 is configured to store computer-executable instructions for executing the solutions of this application, and the processor 401 controls execution of the computer-executable instructions. Specifically, the processor 401 is configured to execute the computer-executable instructions stored in the memory 402, to implement the data scheduling method provided in the embodiments of this application.

Alternatively, optionally, in this embodiment of this application, the processor 401 may perform related processing functions in the data scheduling method provided in the following embodiments of this application. The transceiver 403 is responsible for communicating with another device or another communication network. This is not specifically limited in this embodiment of this application.

Optionally, the computer-executable instructions in this embodiment of this application may also be referred to as application program code or computer program code. This is not specifically limited in this embodiment of this application.

The transceiver 403 may be any type of apparatus using a transceiver, and is configured to communicate with another device or a communication network such as the Ethernet, a radio access network (radio access network, RAN), or a wireless local area network (wireless local area networks, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, a projector (projector), or the like.

The input device 405 communicates with the processor 401, and may receive an input of a user in a plurality of manners. For example, the input device 405 may be a mouse, a keyboard, a touchscreen device, or a sensor device.

The network device 30 includes at least one processor (an example in which the network device 30 includes one processor 301 is used for description in FIG. 3), at least one transceiver (an example in which the network device 30 includes one transceiver 303 is used for description in FIG. 3), and at least one network interface (an example in which the network device 30 includes one network interface 304 is used for description in FIG. 3). Optionally, the network device 30 may further include at least one memory (an example in which the network device 30 includes one memory 302 is used for description in FIG. 3). The processor 301, the memory 302, the transceiver 303, and the network interface 304 are connected through a communication line. The network interface 304 is configured to connect to a core network device through a link (for example, an S1 interface), or connect to a network interface of another network device through a wired or wireless link (for example, an X2 interface) (not shown in FIG. 3). This is not specifically limited in this embodiment of this application. In addition, for descriptions about the processor 301, the memory 302, and the transceiver 303, refer to descriptions about the processor 401, the memory 402, and the transceiver 403 in the terminal device 40. Details are not described again herein.

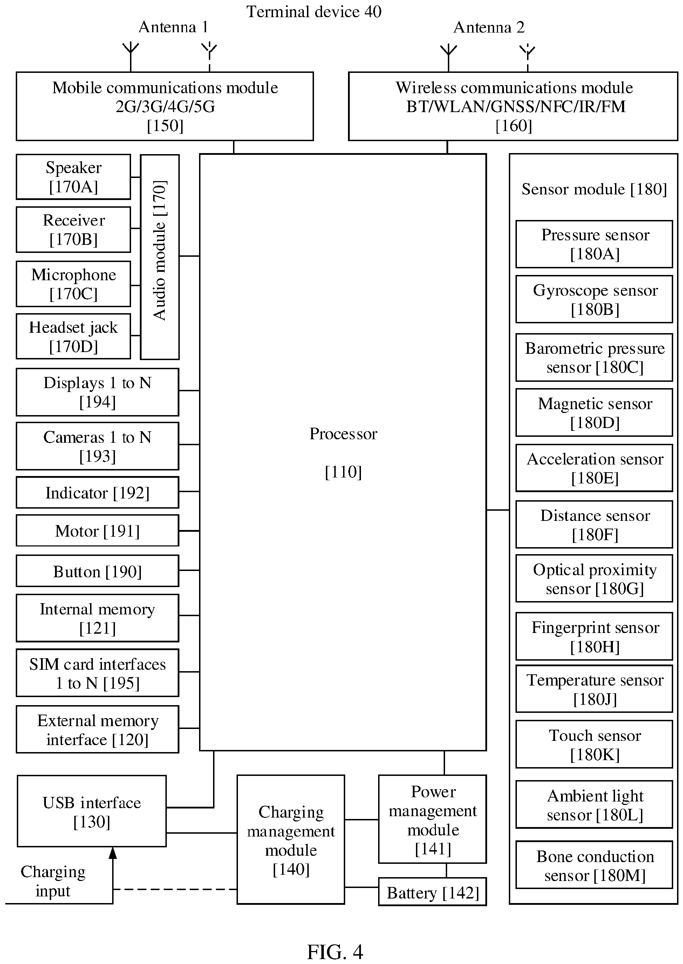

With reference to the schematic structural diagram of the terminal device 40 shown in FIG. 3, for example, FIG. 4 is a specific structural form of the terminal device 40 according to an embodiment of this application.

In some embodiments, a function of the processor 401 in FIG. 3 may be implemented by a processor 110 in FIG. 4.

In some embodiments, a function of the transceiver 403 in FIG. 3 may be implemented via an antenna 1, an antenna 2, a mobile communications module 150, a wireless communications module 160, and the like in FIG. 4.

The antenna 1 and the antenna 2 are configured to transmit and receive an electromagnetic wave signal. Each antenna in the terminal device 40 may be configured to cover one or more communication frequency bands. Different antennas may be further multiplexed, to increase antenna utilization. For example, the antenna 1 may be multiplexed as a diversity antenna in a wireless local area network. In some other embodiments, the antenna may be used in combination with a tuning switch.

The mobile communications module 150 may provide a solution used for wireless communication that includes 2G, 3G, 4G, 5G, and the like and that is applied to the terminal device 40. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some functional modules in the mobile communications module 150 may be disposed in the processor 110. In some embodiments, at least some functional modules in the mobile communications module 150 may be disposed in a same device as at least some modules in the processor 110.

The wireless communications module 160 may provide a solution that is applied to the terminal device 40 and that is for wireless communication such as a wireless local area network (wireless local area networks, WLAN) (for example, a Wi-Fi network), Bluetooth (blue tooth, BT), a global navigation satellite system (global navigation satellite system, GNSS), frequency modulation (frequency modulation, FM), near field communication (near field communication, NFC) technology, or an infrared (infrared, IR) technology. The wireless communications module 160 may be one or more components integrated into at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation. When the terminal device 40 is a first device, that the wireless communications module 160 may provide a solution that is applied to the terminal device 40 and that is for NFC wireless communication means that the first device includes an NFC chip. The NFC chip can improve an NFC wireless communication function. When the terminal device 40 is a second device, that the wireless communications module 160 may provide a solution that is applied to the terminal device 40 and that is for NFC wireless communication means that the first device includes an electronic label (such as a radio frequency identification (radio frequency identification, RFID) label). An NFC chip, near the electronic label, of another device may perform NFC wireless communication with the second device.

In some embodiments, the antenna 1 of the terminal device 40 is coupled to the mobile communications module 150, and the antenna 2 is coupled to the wireless communications module 160, so that the terminal device 40 can communicate with a network and another device by using a wireless communication technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), or a satellite based augmentation system (satellite based augmentation systems, SBAS).

In some embodiments, a function of the memory 402 in FIG. 3 may be implemented via an internal memory 121, an external memory (such as a Micro SD card) connected to an external memory interface 120 in FIG. 4, or the like.

In some embodiments, a function of the output device 404 in FIG. 3 may be implemented via a display 194 in FIG. 4. The display 194 is configured to display an image, a video, and the like. The display 194 includes a display panel.

In some embodiments, a function of the input device 405 in FIG. 3 may be implemented via a mouse, a keyboard, a touchscreen device, or a sensor module 180 in FIG. 4. For example, as shown in FIG. 4, the sensor module 180 may include, for example, one or more of a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, and a bone conduction sensor 180M. This is not specifically limited in this embodiment of this application.

In some embodiments, as shown in FIG. 4, the terminal device 40 may further include one or more of an audio module 170, a camera 193, an indicator 192, a motor 191, a key 190, a SIM card interface 195, a USB interface 130, a charging management module 140, a power management module 141, and a battery 142. The audio module 170 may be connected to a speaker 170A (which is also referred to as a "horn"), a receiver 170B (which is also referred to as an "earpiece"), a microphone 170C (which is also referred to as a "mike" or a "microphone"), a headset jack 170D, or the like. This is not specifically limited in this embodiment of this application.

It may be understood that the structure shown in FIG. 4 does not constitute a specific limitation on the terminal device 40. For example, in some other embodiments of this application, the terminal device 40 may include more or fewer components than those shown in the figure, or combine some components, or split some components, or have different component arrangements. The components shown in the figure may be implemented by using hardware, software, or a combination of software and hardware.

With reference to FIG. 2 to FIG. 4, the following describes in detail the data scheduling method provided in the embodiments of this application by using an example in which the network device 30 interacts with any terminal device 40 in FIG. 2.

It should be noted that, in the following embodiments of this application, a name of a message between network elements or a name or the like of each parameter in the message is merely an example, and may also be another name in specific implementation. This is not specifically limited in this embodiment of this application.

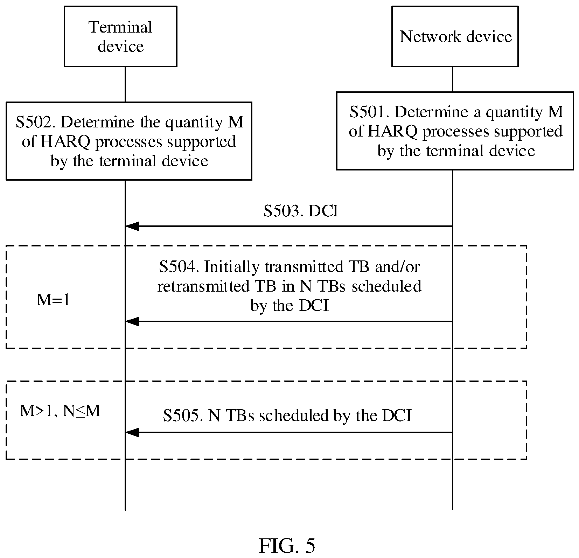

Downlink scheduling is used as an example. FIG. 5 shows a data scheduling method according to an embodiment of this application. The data scheduling method includes the following steps S501 to S503.

S501: A network device determines a quantity M of HARQ processes supported by a terminal device, where M is a positive integer.

Optionally, in this embodiment of this application, a manner in which the network device determines the quantity M of HARQ processes supported by the terminal device depends on implementation. For example, the network device may determine, based on information that can be obtained, the quantity of HARQ processes supported by the terminal device. The information that can be obtained includes but is not limited to one or more of the following information: uplink or downlink resource occupation in a network, an amount of data sent or received by the terminal device, a network load status, or a service type of the terminal device. For example, the service type of the terminal device is a delay-insensitive service. Although the terminal device has a capability of using two HARQs, the network device determines that the quantity M of HARQ processes supported by the terminal device is 1. Alternatively, for example, the service type of the terminal device is a delay-sensitive service. If the terminal device has a capability of using two HARQs, the network device determines that the quantity M of HARQ processes supported by the terminal device is 2.

Alternatively, in a possible implementation, that a network device determines a quantity M of HARQ processes supported by a terminal device includes: If the terminal device does not have a capability of using M1 HARQ processes, the network device determines that the quantity of HARQ processes supported by the terminal device is M, where M1 is a positive integer greater than M. For example, if the terminal device does not have the capability of using two HARQs, the network device determines that the quantity of HARQ processes supported by the terminal device is 1.

Optionally, in this embodiment of this application, the network device may further send a configuration message to the terminal device. The configuration message is used to activate the M HARQ processes. This is not specifically limited in this embodiment of this application.

S502: The terminal device determines the quantity M of HARQ processes supported by the terminal device, where M is a positive integer.

In a possible implementation, that the terminal device determines the quantity M of HARQ processes supported by the terminal device includes: The terminal device receives the configuration message from the network device, where the configuration message is used to activate the M HARQ processes. The terminal device determines, based on the configuration message, that the quantity of HARQ processes supported by the terminal device is M. For example, although the terminal device has the capability of using two HARQs, the configuration message is used to activate one HARQ process (that is, M=1). In this case, the terminal device determines that the quantity of HARQ processes supported by the terminal device is 1. Alternatively, if the terminal device has the capability of using two HARQs, and the configuration message is used to activate two HARQ processes (that is, M=2), the network device determines that the quantity of HARQ processes supported by the terminal device is 2.

Alternatively, in another possible implementation, that the terminal device determines the quantity M of HARQ processes supported by the terminal device includes: If the terminal device does not have the capability of using M1 HARQ processes, the terminal device determines that the quantity of HARQ processes supported by the terminal device is M, where M1 is a positive integer greater than M. For example, if the terminal device does not have the capability of using two HARQs (that is, M1=2), the terminal device determines that the quantity of HARQ processes supported by the terminal device is 1 (that is, M=1).

Alternatively, in still another possible implementation, that the terminal device determines the quantity M of HARQ processes supported by the terminal device includes: The terminal device sends indication information to the network device, where the indication information is used to indicate that the terminal device has the capability of using M1 HARQ processes. If the terminal device does not receive the configuration message from the network device, the terminal device determines that the quantity of HARQ processes supported by the terminal device is M, where the configuration message is used to activate the M1 HARQ processes, and M1 is a positive integer greater than M. For example, the terminal device sends indication information to the network device, where the indication information is used to indicate that the terminal device has the capability of using two HARQs, but the terminal device does not receive the configuration message used to activate two HARQ processes (that is, M1 = 2) from the network device. In this case, the terminal device determines that the quantity of HARQ processes supported by the terminal device is 1 (that is, M=1).

S503: The network device sends DCI to the terminal device. The terminal device receives the DCI from the network device. The DCI includes a first field, where the first field indicates a quantity N of TBs scheduled by the DCI, and N is a positive integer greater than 1.

Optionally, information indicated by the first field in this embodiment of this application may be explicit indication information. For example, "0" indicates that the quantity of TBs scheduled by the DCI is 1, and "1" indicates that the quantity of TBs scheduled by the DCI is 2. Alternatively, "00" indicates that the quantity of TBs scheduled by the DCI is 1, "01" indicates that the quantity of TBs scheduled by the DCI is 2, "10" indicates that the quantity of TBs scheduled by the DCI is 3, and "11" indicates that the quantity of TBs scheduled by the DCI is 4.

Alternatively, optionally, information indicated by the first field in this embodiment of this application may be implicit indication information. For example, the first field may be a k-bit bitmap. If a bit value 1 in the k-bit bitmap indicates one TB, bit values of N bits in the k-bit bitmap may each be set to 1 to indicate the quantity N of TBs scheduled by the DCI. For example, an 8-bit bitmap 10011000 may indicate that the quantity N of TBs scheduled by the DCI is 3. Alternatively, if a bit value 0 in the k-bit bitmap indicates one TB, bit values of N bits in the k-bit bitmap may each be set to 0 to indicate the quantity N of TBs scheduled by the DCI. For example, an 8-bit bitmap 10011100 may indicate the quantity N of TBs scheduled by the DCI is 4.

It should be noted that, for NB-IoT, different quantities of HARQ processes correspond to different DCI sizes (size). For example, a DCI size corresponding to a single HARQ is 23 bits, and a DCI size corresponding to two HARQs is 24 bits. It is considered that when the terminal device blindly detects different DCI sizes, processing complexity increases. Therefore, a relatively proper solution is as follows: The network device first determines the quantity M of HARQ processes supported by the terminal device (step S501), and then sends the DCI to the terminal device (step S503). The terminal device first determines the quantity M of HARQ processes supported by the terminal device (step S502), and then receives the DCI from the network device (step S503). Certainly, during specific implementation, step S503 may alternatively be performed first, and then step S501 or step S502 is performed. Alternatively, step S503 and step S501 or step S502 are performed simultaneously. This is not specifically limited in this embodiment of this application.

If M=1, the data scheduling method provided in this embodiment of this application further includes the following step S504.

S504: The network device sends, in the HARQ process supported by the terminal device, an initially transmitted TB and/or a retransmitted TB in the N TBs scheduled by the DCI. The terminal device receives, in the HARQ process supported by the terminal device, the initially transmitted TB and/or the retransmitted TB in the N TBs scheduled by the DCI.

In a possible implementation, in this embodiment of this application, if M=1, the DCI may further include a second field, where the second field indicates a transmission type of each of the TBs scheduled by the DCI. For example, each of bits occupied by the second field corresponds to one TB in the N TBs scheduled by the DCI, and is used to indicate a transmission type of the corresponding TB. The transmission type herein may be, for example, retransmission or non-retransmission. This is not specifically limited in this embodiment of this application.

Correspondingly, that the network device sends, in the HARQ process supported by the terminal device, an initially transmitted TB and/or a retransmitted TB in the N TBs scheduled by the DCI includes: The network device sends, based on the second field in the HARQ process supported by the terminal device, the retransmitted TB in the TBs scheduled by the DCI. Alternatively, the network device sends, based on the second field in the HARQ process supported by the terminal device, the N initially transmitted TBs scheduled by the DCI. That the terminal device receives, in the HARQ process supported by the terminal device, the initially transmitted TB and/or the retransmitted TB in the N TBs scheduled by the DCI includes: The terminal device receives, based on the second field in the HARQ process supported by the terminal device, the retransmitted TB in the TBs scheduled by the DCI. Alternatively, the terminal device receives, based on the second field in the HARQ process supported by the terminal device, the N initially transmitted TBs scheduled by the DCI.

For example, if M=1 and N=2, the second field may occupy 2 bits. If a bit value "1" indicates retransmission, a bit value "0" indicates non-retransmission, and two TBs are denoted as a TB 1 and a TB 2, a meaning of the second field may be that described in Table 3.

**Table 3**

| Second field | Field description |
|---|---|
| 00 | Neither a TB 1 nor a TB 2 is retransmitted. |
| 10 | A TB 1 is retransmitted, and a TB 2 is not retransmitted. |
| 01 | A TB 1 is not retransmitted, and a TB 2 is retransmitted. |
| 11 | A TB 1 is retransmitted, and a TB 2 is retransmitted. |

Certainly, if a bit value "1" indicates non-retransmission, a bit value "0" indicates retransmission, and two TBs are denoted as a TB 1 and a TB 2, a meaning of the second field may be that described in Table 4.

**Table 4**

| Second field | Field description |
|---|---|
| 00 | A TB 1 is retransmitted, and a TB 2 is retransmitted. |
| 10 | A TB 1 is not retransmitted, and a TB 2 is retransmitted. |
| 01 | A TB 1 is retransmitted, and a TB 2 is not retransmitted. |
| 11 | Neither a TB 1 nor a TB 2 is retransmitted. |

It should be noted that, that neither the TB 1 nor the TB 2 is retransmitted in Table 3 and Table 4 may be understood as that both the TB 1 and the TB 2 are initially transmitted. This is uniformly described herein, and details are not described herein again.

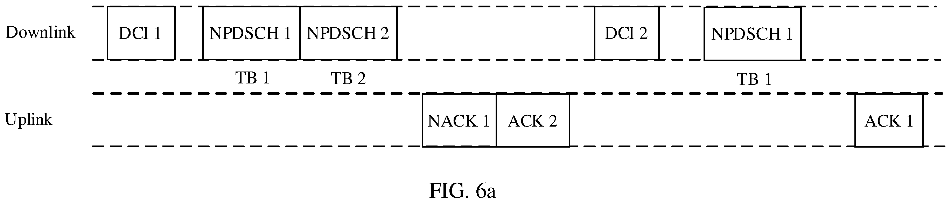

For example, the meaning of the second field is shown in Table 3. As shown in FIG. 6a, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that the currently scheduled two TBs are initially transmitted TBs. If the terminal device detects that a TB 1 fails to be received and a TB 2 is successfully received, the terminal device sends a NACK 1 corresponding to the TB 1 and an ACK 2 corresponding to the TB 2 to the network device.

Further, the network device learns, based on the NACK 1 corresponding to the TB 1, that the TB 1 fails to be received, and may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "10", indicating that the currently scheduled TB is a retransmitted TB 1. If the terminal device detects that the TB 1 is successfully received, the terminal device sends an ACK 1 corresponding to the TB 1 to the network device.

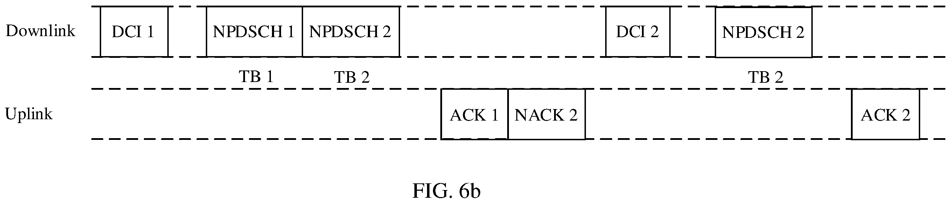

Alternatively, for example, the meaning of the second field is shown in Table 3. As shown in FIG. 6b, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that currently scheduled two TBs are initially transmitted TBs. If the terminal device detects that a TB 1 is successfully received and a TB 2 fails to be received, the terminal device sends an ACK 1 corresponding to the TB 1 and a NACK 2 corresponding to the TB 2 to the network device.

Further, the network device learns, based on the NACK 2 corresponding to the TB 2, that the TB 2 fails to be received, and may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "01", indicating that the currently scheduled TB is a retransmitted TB 2. If the terminal device detects that the TB 2 is successfully received, the terminal device sends an ACK 2 corresponding to the TB 2 to the network device.

It should be noted that both Table 3 and Table 4 are examples in which retransmission or non-retransmission is indicated by using an absolute value of a bit value. Certainly, retransmission or non-retransmission may alternatively be indicated by using a relative value of a bit value. For example, if M=1 and N=2, the second field may occupy 2 bits. It is assumed that two TBs are denoted as a TB 1 and a TB 2, that a bit associated with a TB is toggled indicates non-retransmission, and that the bit associated with the TB is not toggled indicates retransmission. In this case, the meaning of the second field may be that described in Table 5.

**Table 5**

| Second field | Field description |
|---|---|
| A bit associated with a TB 1 is toggled, and a bit associated with a TB 2 is toggled. | Neither the TB 1 nor the TB 2 is retransmitted. |
| A bit associated with a TB 1 is not toggled, and a bit associated with a TB 2 is toggled. | The TB 1 is retransmitted, and the TB 2 is not retransmitted. |
| A bit associated with a TB 1 is toggled, and a bit associated with a TB 2 is not toggled. | The TB 1 is not retransmitted, and the TB 2 is retransmitted. |
| A bit associated with a TB 1 is not toggled, and a bit associated with a TB 2 is not toggled. | The TB 1 is retransmitted, and the TB 2 is retransmitted. |

It should be noted that Table 5 is merely an example in which the bit associated with the TB is toggled indicates non-retransmission, and the bit associated with the TB is not toggled indicates retransmission. Certainly, the bit associated with the TB is not toggled may alternatively indicate non-retransmission, and the bit associated with the TB is toggled may indicate retransmission. In this case, the meaning of the second field may be that described in Table 6. This is not specifically limited in this embodiment of this application.

**Table 6**

| Second field | Field description |
|---|---|
| A bit associated with a TB 1 is not toggled, and a bit associated with a TB 2 is not toggled. | Neither the TB 1 nor the TB 2 is retransmitted. |
| A bit associated with a TB 1 is toggled, and a bit associated with a TB 2 is not toggled. | The TB 1 is retransmitted, and the TB 2 is not retransmitted. |
| A bit associated with a TB 1 is not toggled, and a bit associated with a TB 2 is toggled. | The TB 1 is not retransmitted, and the TB 2 is retransmitted. |
| A bit associated with a TB 1 is toggled, and a bit associated with a TB 2 is toggled. | The TB 1 is retransmitted, and the TB 2 is retransmitted. |

It should be noted that, that neither the TB 1 nor the TB 2 is retransmitted in Table 5 and Table 6 may be understood as that both the TB 1 and the TB 2 are initially transmitted. This is uniformly described herein, and details are not described herein again.

It can be learned from the foregoing examples that, in this implementation, a quantity of TBs indicated by initial transmission DCI is the same as that indicated by retransmission DCI. For example, the quantity of initially transmitted TBs is 2, and even if only one TB is retransmitted during retransmission, the quantity of TBs should be set to 2, to ensure consistent understanding of the terminal device. This is uniformly described herein, and details are not described herein again.

In another possible implementation, in this embodiment of this application, if M=1, the DCI may further include a third field, where the third field indicates an NDI corresponding to each of the N TBs scheduled by the DCI.

Correspondingly, that the network device sends, in the HARQ process supported by the terminal device, an initially transmitted TB and/or a retransmitted TB in the N TBs scheduled by the DCI includes: The network device sends, based on the third field in the HARQ process supported by the terminal device, the N TBs scheduled by the DCI. That the terminal device receives, in the HARQ process supported by the terminal device, the initially transmitted TB and/or the retransmitted TB in the N TBs scheduled by the DCI includes: The terminal device receives, based on the third field in the HARQ process supported by the terminal device, the N TBs scheduled by the DCI.

Optionally, in this embodiment of this application, that an NDI corresponding to the TB is not toggled may indicate retransmission, and that the NDI corresponding to the TB is toggled may indicate initial transmission. Alternatively, that an NDI corresponding to the TB is toggled may indicate retransmission, and that the NDI corresponding to the TB is not toggled may indicate initial transmission. This is not specifically limited herein.

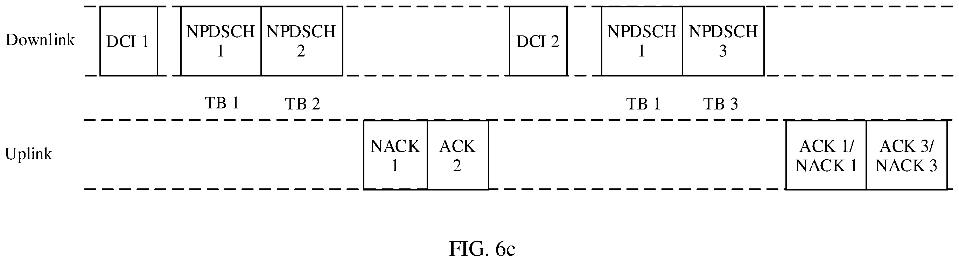

For example, that the NDI corresponding to the TB is not toggled indicates retransmission, that the NDI is toggled indicates initial transmission, and an initial value is 0. As shown in FIG. 6c, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that the currently scheduled two TBs are initially transmitted TBs. It is assumed that the most significant bit corresponds to a TB 1, the least significant bit corresponds to a TB 2, and the terminal device detects that the TB 1 fails to be received and the TB 2 is successfully received. In this case, the terminal device sends a NACK 1 corresponding to the TB 1 and an ACK 2 corresponding to the TB 2 to the network device.

Further, the network device learns, based on the NACK 1 corresponding to the TB 1, that the TB 1 fails to be received, and may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "01". Because a bit value of the most significant bit is not toggled, and a bit value of the least significant bit is toggled, it may indicate that the TB 1 is retransmitted and a TB 3 is initially transmitted. Further, the terminal device may send, based on receiving statuses of the TB 1 and the TB 3, an ACK 1/the NACK 1 corresponding to the TB 1 and an ACK 3/NACK 3 corresponding to the TB 3 to the network device.

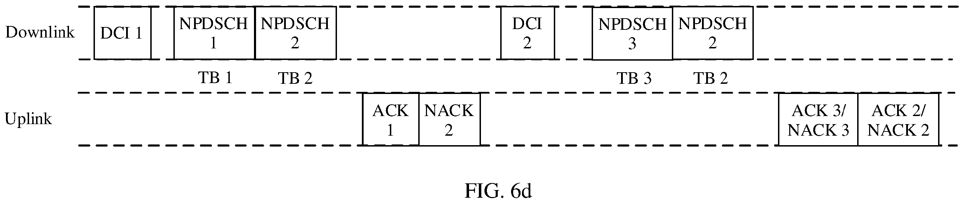

Alternatively, for example, that the NDI corresponding to the TB is not toggled indicates retransmission, that the NDI is toggled indicates initial transmission, and an initial value is 0. As shown in FIG. 6d, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that the currently scheduled two TBs are initially transmitted TBs. It is assumed that the most significant bit corresponds to a TB 1, and the least significant bit corresponds to a TB 2, and the terminal device detects that the TB 1 is successfully received and the TB 2 fails to be received. In this case, the terminal device sends an ACK 1 corresponding to the TB 1 and a NACK 2 corresponding to the TB 2 to the network device.

Further, the network device learns, based on the NACK 2 corresponding to the TB 2, that the TB 2 fails to be received, and may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "10". Because a bit value of the most significant bit is toggled, and a bit value of the least significant bit is not toggled, it may indicate that a TB 3 is initially transmitted and the TB 2 is retransmitted. Further, the terminal device may send, based on receiving statuses of the TB 3 and the TB 2, an ACK 3/NACK 3 corresponding to the TB 3 and an ACK 2/the NACK 2 corresponding to the TB 2 to the network device.

Alternatively, if M is greater than 1, and N is less than or equal to M, the data scheduling method provided in this embodiment of this application further includes the following step S505.

S505: The network device sends, in N HARQ processes in the M HARQ processes supported by the terminal device, the N TBs scheduled by the DCI. The terminal device receives, in the N HARQ processes in the M HARQ processes supported by the terminal device, the N TBs scheduled by the DCI. Each of the N HARQ processes corresponds to one TB in the N TBs.

In a possible implementation, in this embodiment of this application, if M is greater than 1, and N is less than or equal to M, the DCI may further include a fourth field, where the fourth field indicates an NDI corresponding to each of the N HARQ processes. For example, each of bits occupied by the fourth field corresponds to one HARQ process in the N HARQ processes, and is used to indicate an NDI corresponding to the corresponding HARQ process.

Correspondingly, that the network device sends, in N HARQ processes, the N TBs scheduled by the DCI includes: The network device sends, based on the fourth field in the N HARQ processes, the N TBs scheduled by the DCI. That the terminal device receives, in the N HARQ processes, the N TBs scheduled by the DCI includes: The terminal device receives, based on the fourth field in the N HARQ processes, the N TBs scheduled by the DCI.

Optionally, in this embodiment of this application, that an NDI corresponding to a HARQ process is not toggled may indicate retransmission, and that the NDI corresponding to the HARQ process is toggled may indicate initial transmission. Alternatively, that an NDI corresponding to a HARQ process is toggled may indicate retransmission, and that the NDI corresponding to the HARQ process is not toggled may indicate initial transmission. This is not specifically limited herein.

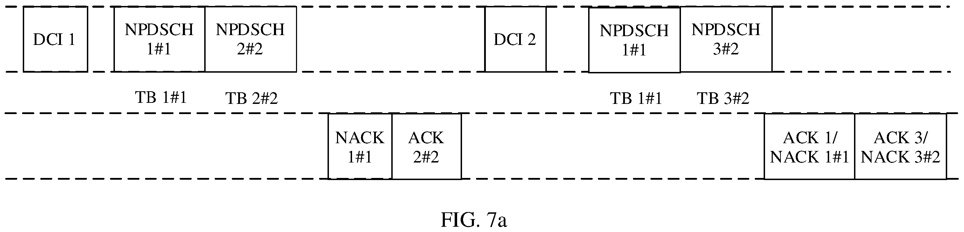

For example, that the NDI corresponding to the HARQ process is not toggled indicates retransmission, that the NDI corresponding to the HARQ process is toggled indicates initial transmission, and an initial value is 0. As shown in FIG. 7a, if M=2 and N=2, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that currently scheduled transmission of two HARQs is initial transmission. If the most significant bit corresponds to a TB 1, and the least significant bit corresponds to a TB 2, a HARQ process 1 (namely, #1) corresponds to the TB 1, and a HARQ process 2 (namely, #2) corresponds to the TB 2. If the terminal device detects that the TB 1 fails to be received and the TB 2 is successfully received, the terminal device sends a NACK 1 corresponding to the TB 1 and an ACK 2 corresponding to the TB 2 to the network device.

Further, the network device learns, based on the NACK 1 corresponding to the TB 1, that the TB 1 fails to be received, and may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "01". Because a bit value of the most significant bit is not toggled, and a bit value of the least significant bit is toggled, it may indicate that the TB 1 corresponding to the HARQ process 1 (namely, #1) is retransmitted, and a TB 3 corresponding to the HARQ process 2 (namely, #2) is initially transmitted. Further, the terminal device may send, based on receiving statuses of the TB 1 and the TB 3, an ACK 1/the NACK 1 corresponding to the TB 1 and an ACK 3/NACK 3 corresponding to the TB 3 to the network device.

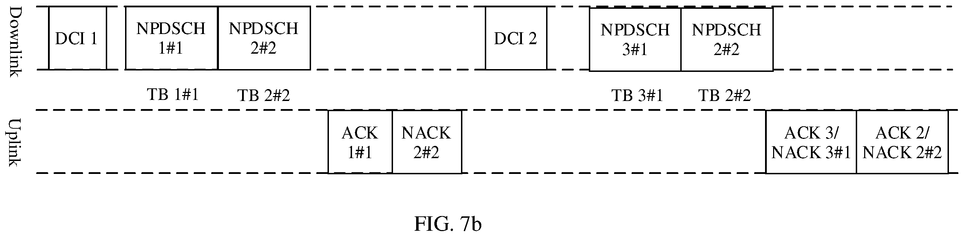

Alternatively, for example, that the NDI corresponding to the HARQ process is not toggled indicates retransmission, that the NDI corresponding to the HARQ process is toggled indicates initial transmission, and an initial value is 0. As shown in FIG. 7b, if M=2 and N=2, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that currently scheduled transmission of two HARQs is initial transmission. If the most significant bit corresponds to a TB 1, and the least significant bit corresponds to a TB 2, a HARQ process 1 (namely, #1) corresponds to the TB 1, and a HARQ process 2 (namely, #2) corresponds to the TB 2. If the terminal device detects that the TB 1 is successfully received and the TB 2 fails to be received, the terminal device sends an ACK 1 corresponding to the TB 1 and a NACK 2 corresponding to the TB 2 to the network device.

Further, the network device learns, based on the NACK 2 corresponding to the TB 2, that the TB 2 fails to be received, and may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "10". Because a bit value of the most significant bit is toggled, and a bit value of the least significant bit is not toggled, it may indicate that a TB 3 corresponding to the HARQ process 1 (namely, #1) is initially transmitted, and the TB 2 corresponding to the HARQ process 2 (namely, #2) is retransmitted. Further, the terminal device may send, based on receiving statuses of the TB 3 and the TB 2, an ACK 3/NACK 3 corresponding to the TB 3 and an ACK 2/the NACK 2 corresponding to the TB 2 to the network device.

In addition, the DCI provided in this embodiment of this application may further include a flag for format N0/format N1 differentiation field, an NPDCCH order indicator field, a scheduling delay field, a resource assignment field, an MCS field, a repetition number field, a HARQ-ACK resource field, a DCI repetition number field, or the like. For details, refer to a related field in an existing DCI format N1 that does not support multi-TB scheduling. Details are not described herein again.

In the examples shown in FIG. 6a to FIG. 6d and FIG. 7a and FIG. 7b, compared with the existing DCI format N1 that does not support multi-TB scheduling, when a quantity of bits of the flag for format N0/format N1 differentiation field, the NPDCCH order indicator field, the scheduling delay field, the resource assignment field, the MCS field, the repetition number field, the HARQ-ACK resource field, and the DCI repetition number field is not changed, a quantity of bits of the DCI only increases by 3 bits. Therefore, it can be ensured that performance of the newly designed DCI is equivalent to that of the existing DCI format N1 that does not support multi-TB scheduling, so that a gain of reducing DCI resource overheads can be maximized.

This embodiment of this application provides a DCI design supporting multi-TB scheduling. When one piece of DCI schedules a plurality of TBs, the DCI in this embodiment of this application includes the first field used to indicate the quantity of TBs scheduled by the DCI, and the terminal device and the network device may determine the quantity of HARQ processes supported by the terminal device, and further perform downlink scheduling based on the quantity of TBs scheduled by the DCI and the quantity of HARQ processes supported by the terminal device. Therefore, scheduling of the plurality of TBs can be implemented.

The processor 301 in the network device 30 shown in FIG. 3 may invoke application program code stored in the memory 302, to instruct the network device to perform the actions of the network device in steps S501 to S504 or S505. The processor 401 in the terminal device 40 shown in FIG. 3 may invoke application program code stored in the memory 402, to instruct the network device to perform the actions of the terminal device in steps S501 to S504 or S505. This is not limited in this embodiment.

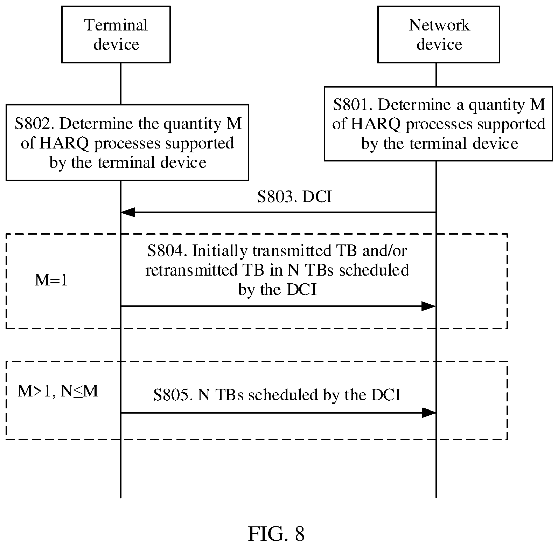

Uplink scheduling is used as an example. FIG. 8 shows a data scheduling method according to an embodiment of this application. The data scheduling method includes the following steps S801 to S803.

S801: A network device determines a quantity M of HARQ processes supported by a terminal device, where M is a positive integer.

S802: The terminal device determines the quantity M of HARQ processes supported by the terminal device, where M is a positive integer.

S803: The network device sends DCI to the terminal device. The terminal device receives the DCI from the network device. The DCI includes a first field, where the first field indicates a quantity N of TBs scheduled by the DCI, and N is a positive integer greater than 1.

For related descriptions of steps S801 to S803 in this embodiment of this application, refer to steps S501 to S503 in the embodiment shown in FIG. 5. Details are not described herein again.

If M=1, the data scheduling method provided in this embodiment of this application further includes the following step S804.

S804: The terminal device sends, in the HARQ process supported by the terminal device, an initially transmitted TB and/or a retransmitted TB in the N TBs scheduled by the DCI. The network device receives, in the HARQ process supported by the terminal device, the initially transmitted TB and/or the retransmitted TB in the N TBs scheduled by the DCI.

In a possible implementation, in this embodiment of this application, if M=1, the DCI may further include a second field, where the second field indicates a transmission type of each of the TBs scheduled by the DCI. For example, each of bits occupied by the second field corresponds to one TB in the N TBs scheduled by the DCI, and is used to indicate a transmission type of the corresponding TB. The transmission type herein may be, for example, retransmission or non-retransmission. This is not specifically limited in this embodiment of this application.

Correspondingly, that the terminal device sends, in the HARQ process supported by the terminal device, an initially transmitted TB and/or a retransmitted TB in the N TBs scheduled by the DCI includes: The terminal device sends, based on the second field in the HARQ process supported by the terminal device, the retransmitted TB in the TBs scheduled by the DCI. Alternatively, the terminal device sends, based on the second field in the HARQ process supported by the terminal device, the N initially transmitted TBs scheduled by the DCI. That the network device receives, in the HARQ process supported by the terminal device, the initially transmitted TB and/or the retransmitted TB in the N TBs scheduled by the DCI includes: The network device receives, based on the second field in the HARQ process supported by the terminal device, the retransmitted TB in the TBs scheduled by the DCI. Alternatively, the network device receives, based on the second field in the HARQ process supported by the terminal device, the N initially transmitted TBs scheduled by the DCI.

For example, if M=1 and N=2, the second field may occupy 2 bits. If a bit value "1" indicates retransmission, a bit value "0" indicates non-retransmission, and two TBs are denoted as a TB 1 and a TB 2, a meaning of the second field may be that described in Table 3. Details are not described herein again. Certainly, if a bit value "1" indicates non-retransmission, a bit value "0" indicates retransmission, and two TBs are denoted as a TB 1 and a TB 2, a meaning of the second field may be that described in Table 4. Details are not described herein again.

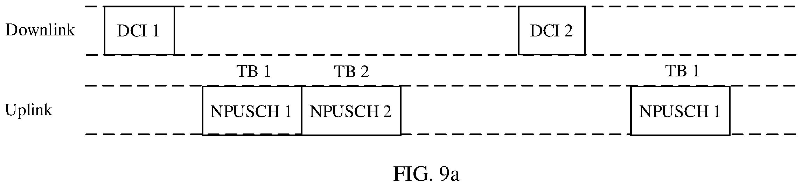

For example, the meaning of the second field is that described in Table 3. As shown in FIG. 9a, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that the currently scheduled two TBs are initially transmitted TBs. After receiving the DCI 1, the terminal device may send the TB 1 and the TB 2 to the network device. If the network device detects that the TB 1 fails to be received and the TB 2 is successfully received, the network device may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "10", indicating that the currently scheduled TB is a retransmitted TB 1. After receiving the DCI 2, the terminal device may send the TB 1 to the network device.

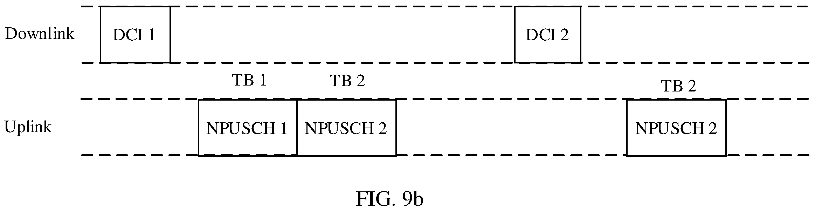

Alternatively, for example, the meaning of the second field is that described in Table 3. As shown in FIG. 9b, the network device may send DCI 1 to the terminal device. The DCI 1 may include a field 1, the field 1 occupies one bit, and a bit value is "1", indicating that the quantity of TBs scheduled by the DCI 1 is 2. In addition, the DCI 1 may further include a field 2, the field 2 occupies two bits, and bit values are "00", indicating that the currently scheduled two TBs are initially transmitted TBs. After receiving the DCI 1, the terminal device may send the TB 1 and the TB 2 to the network device. If the network device detects that the TB 1 is successfully received and the TB 2 fails to be received, the network device may send DCI 2 to the terminal device. The DCI 2 may include a field 1, the field 1 occupies one bit, and a bit value is "1", indicating that the quantity of TBs scheduled by the DCI 2 is 2. In addition, the DCI 2 may further include a field 2, the field 2 occupies two bits, and bit values are "01", indicating that the currently scheduled TB is a retransmitted TB 2. After receiving the DCI 2, the terminal device may send the TB 2 to the network device.

It should be noted that both Table 3 and Table 4 are examples in which retransmission or non-retransmission is indicated by using an absolute value of a bit value. Certainly, retransmission or non-retransmission may alternatively be indicated by using a relative value of a bit value. For related descriptions, refer to Table 5 and Table 6. Details are not described herein again.

In another possible implementation, in this embodiment of this application, if M=1, the DCI may further include a third field, where the third field indicates an NDI corresponding to each of the N TBs scheduled by the DCI.

Correspondingly, that the terminal device sends, in the HARQ process supported by the terminal device, an initially transmitted TB and/or a retransmitted TB in the N TBs scheduled by the DCI includes: The terminal device sends, based on the third field in the HARQ process supported by the terminal device, the N TBs scheduled by the DCI. That the network device receives, in the HARQ process supported by the terminal device, the initially transmitted TB and/or the retransmitted TB in the N TBs scheduled by the DCI includes: The network device receives, based on the third field in the HARQ process supported by the terminal device, the N TBs scheduled by the DCI.

Optionally, in this embodiment of this application, that an NDI corresponding to the TB is not toggled may indicate retransmission, and that the NDI corresponding to the TB is toggled may indicate initial transmission. Alternatively, that an NDI corresponding to the TB is toggled may indicate retransmission, and that the NDI corresponding to the TB is not toggled may indicate initial transmission. This is not specifically limited herein.

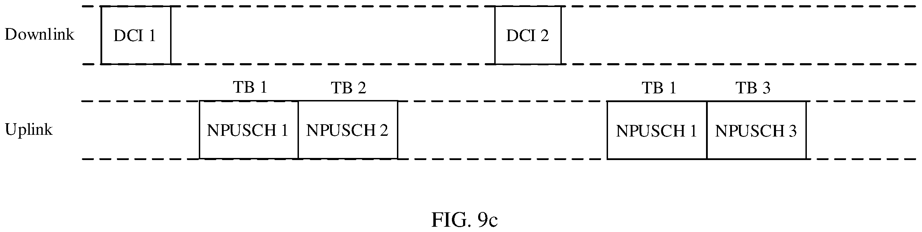

For example, that the NDI corresponding to the TB is not toggled indicates retransmission, that the NDI is toggled indicates initial transmission, and an initial value is 0. As shown in FIG. 9c, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that the currently scheduled two TBs are initially transmitted TBs. After receiving the DCI 1, the terminal device may send the TB 1 and the TB 2 to the network device. It is assumed that the most significant bit corresponds to the TB 1, the least significant bit corresponds to the TB 2, the network device detects that the TB 1 fails to be received and the TB 2 is successfully received. In this case, the network device may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "01". Because a bit value of the most significant bit is not toggled, and a bit value of the least significant bit is toggled, it may indicate that the TB 1 is retransmitted and a TB 3 is initially transmitted. After receiving the DCI 2, the terminal device may send the retransmitted TB 1 and the initially transmitted TB 3 to the network device.

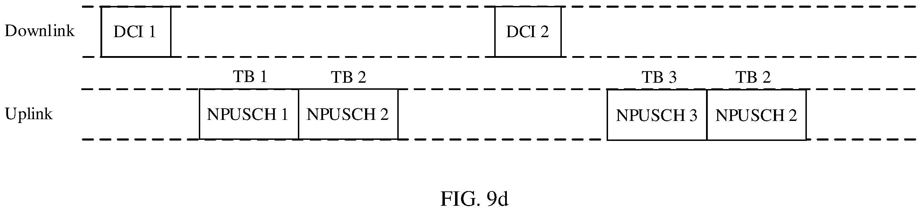

Alternatively, for example, that the NDI corresponding to the TB is not toggled indicates retransmission, that the NDI is toggled indicates initial transmission, and an initial value is 0. As shown in FIG. 9d, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that the currently scheduled two TBs are initially transmitted TBs. After receiving the DCI 1, the terminal device may send the TB 1 and the TB 2 to the network device. It is assumed that the most significant bit corresponds to the TB 1, the least significant bit corresponds to the TB 2, the network device detects that the TB 1 is successfully received and the TB 2 fails to be received. In this case, the network device may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "10". Because a bit value of the most significant bit is toggled, and a bit value of the least significant bit is not toggled, it may indicate that a TB 3 is initially transmitted and the TB 2 is retransmitted. After receiving the DCI 2, the terminal device may send the initially transmitted TB 3 and the retransmitted TB 2 to the network device.

Alternatively, if M is greater than 1, and N is less than or equal to M, the data scheduling method provided in this embodiment of this application further includes the following step S805.

S805: The terminal device sends, in N HARQ processes in the M HARQ processes supported by the terminal device, the N TBs scheduled by the DCI. The network device receives, in the N HARQ processes in the M HARQ processes supported by the terminal device, the N TBs scheduled by the DCI. Each of the N HARQ processes corresponds to one TB in the N TBs.

In a possible implementation, in this embodiment of this application, if M is greater than 1, and N is less than or equal to M, the DCI may further include a fourth field, where the fourth field indicates an NDI corresponding to each of the N HARQ processes. For example, each of bits occupied by the fourth field corresponds to one HARQ process in the N HARQ processes, and is used to indicate an NDI corresponding to the corresponding HARQ process.

Correspondingly, that the terminal device sends, in N HARQ processes, the N TBs scheduled by the DCI includes: The terminal device sends, based on the fourth field in the N HARQ processes, the N TBs scheduled by the DCI. That the network device receives, in the N HARQ processes, the N TBs scheduled by the DCI includes: The network device receives, based on the fourth field in the N HARQ processes, the N TBs scheduled by the DCI.

Optionally, in this embodiment of this application, that an NDI corresponding to a HARQ process is not toggled may indicate retransmission, and that the NDI corresponding to the HARQ process is toggled may indicate initial transmission. Alternatively, that an NDI corresponding to a HARQ process is toggled may indicate retransmission, and that the NDI corresponding to the HARQ process is not toggled may indicate initial transmission. This is not specifically limited herein.

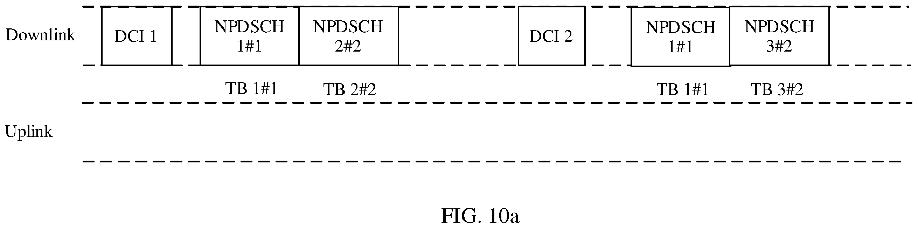

For example, that the NDI corresponding to the HARQ process is not toggled indicates retransmission, that the NDI corresponding to the HARQ process is toggled indicates initial transmission, and an initial value is 0. As shown in FIG. 10a, if M=2 and N=2, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that currently scheduled transmission of two HARQs is initial transmission. After receiving the DCI 1, the terminal device may send a TB 1 and a TB 2 to the network device. If the most significant bit corresponds to the TB 1, and the least significant bit corresponds to the TB 2, a HARQ process 1 (namely, #1) corresponds to the TB 1, and a HARQ process 2 (namely, #2) corresponds to the TB 2. If the network device detects that the TB 1 fails to be received and the TB 2 is successfully received, the network device may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are "01". Because a bit value of the most significant bit is not toggled, and a bit value of the least significant bit is toggled, it may indicate that the TB 1 corresponding to the HARQ process 1 (namely, #1) is retransmitted, and a TB 3 corresponding to the HARQ process 2 (namely, #2) is initially transmitted. Further, after receiving the DCI 2, the terminal device may send the retransmitted TB 1 and the initially transmitted TB 3 to the network device.

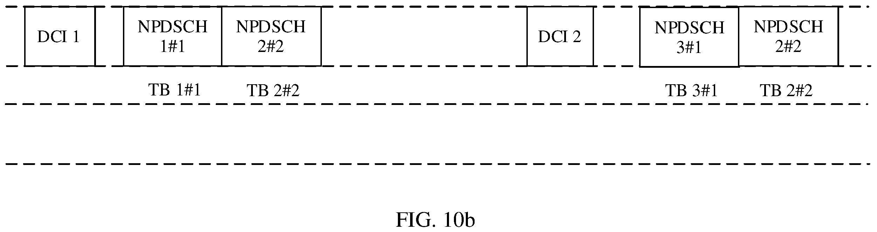

Alternatively, for example, that the NDI corresponding to the HARQ process is not toggled indicates retransmission, that the NDI corresponding to the HARQ process is toggled indicates initial transmission, and an initial value is 0. As shown in FIG. 10b, if M=2 and N=2, the network device may send DCI 1 to the terminal device. The DCI 1 may include a field 1, the field 1 occupies one bit, and a bit value is "1", indicating that a quantity of TBs scheduled by the DCI 1 is 2. In addition, the DCI 1 may further include a field 2, the field 2 occupies two bits, and bit values are "00", indicating that currently scheduled transmission of two HARQs is initial transmission. After receiving the DCI 1, the terminal device may send a TB 1 and a TB 2 to the network device. If the most significant bit corresponds to the TB 1, and the least significant bit corresponds to the TB 2, a HARQ process 1 (namely, #1) corresponds to the TB 1, and a HARQ process 2 (namely, #2) corresponds to the TB 2. If the network device detects that the TB 1 is successfully received and the TB 2 fails to be received, the network device may send DCI 2 to the terminal device. The DCI 2 may include a field 1, the field 1 occupies one bit, and a bit value is "1", indicating that a quantity of TBs scheduled by the DCI 2 is 2. In addition, the DCI 2 may further include a field 2, the field 2 occupies two bits, and bit values are " 10". Because a bit value of the most significant bit is toggled, and a bit value of the least significant bit is not toggled, it may indicate that a TB 3 corresponding to the HARQ process 1 (namely, #1) is initially transmitted, and the TB 2 corresponding to the HARQ process 2 (namely, #2) is retransmitted. Further, after receiving the DCI 2, the terminal device may send the initially transmitted TB 3 and the retransmitted TB 2 to the network device.

Optionally, for uplink scheduling, the DCI provided in this embodiment of this application may further include a fifth field, where the fifth field is used to indicate a first redundancy version corresponding to the retransmitted TB. A redundancy version corresponding to the initially transmitted TB is a specified second redundancy version. In other words, the redundancy version corresponding to the initially transmitted TB is preset, and a redundancy version corresponding to the retransmitted TB is indicated by using the DCI.

Alternatively, optionally, for uplink scheduling, the DCI provided in this embodiment of this application does not include a field used to indicate a redundancy version, but a redundancy version corresponding to the retransmitted TB is a specified first redundancy version, and a redundancy version corresponding to the initially transmitted TB is a specified second redundancy version. In other words, both the redundancy version corresponding to the retransmitted TB and the redundancy version corresponding to the initially transmitted TB may be preset. In this way, 1 bit may be further saved in a DCI design.

In this embodiment of this application, the first redundancy version may be different from the second redundancy version, or the first redundancy version may be the same as the second redundancy version. This is not specifically limited in this embodiment of this application. For example, the first redundancy version may be an RV 2, and the second redundancy version may be an RV 0. Alternatively, the first redundancy version may be an RV 0, and the second redundancy version may be an RV 2.

In addition, the DCI provided in this embodiment of this application may further include a flag for format N0/format N1 differentiation field, a subcarrier indication field, a scheduling delay field, a resource assignment field, an MCS field, a repetition number field, a DCI repetition number field, or the like. For details, refer to a related field in an existing DCI format N0 that does not support multi-TB scheduling. Details are not described herein again.

In the examples shown in FIG. 9a to FIG. 9d and FIG. 10a to FIG. 10b, compared with the existing DCI format N0 that does not support multi-TB scheduling, when a quantity of bits of the flag for format N0/format N1 differentiation field, the subcarrier indication field, the scheduling delay field, the resource assignment field, the MCS field, the repetition number field, or the DCI repetition number field does not change, if the DCI does not include an RV field, a quantity of bits of the DCI only increases by 2 bits. If the DCI includes an RV field, a quantity of bits of the DCI only increases by 3 bits. Therefore, it can be ensured that performance of the newly designed DCI is equivalent to that of the existing DCI format N1 that does not support multi-TB scheduling, so that a gain of reducing DCI resource overheads can be maximized.

This embodiment of this application provides a DCI design supporting multi-TB scheduling. When one piece of DCI schedules a plurality of TBs, the DCI in this embodiment of this application includes the first field used to indicate the quantity of TBs scheduled by the DCI, and the terminal device and the network device may determine the quantity of HARQ processes supported by the terminal device, and further perform uplink scheduling based on the quantity of TBs scheduled by the DCI and the quantity of HARQ processes supported by the terminal device. Therefore, scheduling of the plurality of TBs can be implemented.

The processor 301 in the network device 30 shown in FIG. 3 may invoke application program code stored in the memory 302, to instruct the network device to perform the actions of the network device in steps S801 to S804 or S805. The processor 401 in the terminal device 40 shown in FIG. 3 may invoke application program code stored in the memory 402, to instruct the network device to perform the actions of the terminal device in steps S801 to S804 or S805. This is not limited in this embodiment.

Optionally, for downlink scheduling shown in FIG. 5 or uplink scheduling shown in FIG. 8, considering that one HARQ process schedules N TBs (where N is a positive integer greater than 1), a sum of soft buffers (soft buffer) of the N TBs cannot exceed a hardware capability limitation. A limitation of a TB size (TB size, TBS) corresponding to each TB needs to be added, for example, TBSmax/N, where TBSmax is a maximum TBS supported by the terminal device. For a plurality of HARQ processes, each HARQ process corresponds to one TB, and a TBS corresponding to each TB is not limited, or for one HARQ process, one TB is scheduled, and a TBS corresponding to each TB is not limited. Therefore, based on the foregoing embodiment, the DCI further includes a sixth field and a seventh field, where the sixth field is used to indicate scheduling resource assignment, and the seventh field is used to indicate a modulation order. If M=1, the sixth field occupies X1 bits, and the seventh field occupies Y1 bits; or if M is greater than 1, and N is less than or equal to M, the sixth field occupies X2 bits, and the seventh field occupies Y2 bits. X1 is less than X2, and Y1 is equal to Y2; X1 is equal to X2, and Y1 is less than Y2; or X1 is less than X2, and Y1 is less than Y2. X1, X2, Y1, and Y2 are all positive integers.

For example, the sixth field herein may be the foregoing resource assignment field, and the seventh field herein may be the foregoing MCS field. For a single HARQ process (that is, M=1), when the quantity of TBs is greater than 1, a quantity of bits of at least one field in the MCS field or the resource assignment field in the DCI may be further reduced.

Table 7 is a TBS table for NB-IoT downlink scheduling. *I*_{MCS} may be determined based on the MCS field in the DCI format N1, and *I*_{TBS} = *I*_{MCS}, so that a row index *I*_{TBS} in the table may be determined. *I*_{SF} may be determined based on the resource assignment field in the DCI format N1. When the quantity of TBs is greater than 1, *I*_{MCS} may only support 0 to 7, or *I*_{SF} may only support 0 to 3, so that a quantity of bits of at least one field in the MCS field or the resource assignment field in the DCI may be reduced by 1 bit.

**Table 7**

| *I*_{TBS} | *I*_{SF} | | | | | | | |
|---|---|---|---|---|---|---|---|---|
| | 0 | 1 | 2 | 3 | 4 | 5 | 6 | 7 |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |
| 5 | 72 | 144 | 224 | 328 | 424 | 504 | 680 | 872 |
| 6 | 88 | 176 | 256 | 392 | 504 | 600 | 808 | 1032 |
| 7 | 104 | 224 | 328 | 472 | 584 | 680 | 968 | 1224 |
| 8 | 120 | 256 | 392 | 536 | 680 | 808 | 1096 | 1352 |
| 9 | 136 | 296 | 456 | 616 | 776 | 936 | 1256 | 1544 |
| 10 | 144 | 328 | 504 | 680 | 872 | 1032 | 1384 | 1736 |
| 11 | 176 | 376 | 584 | 776 | 1000 | 1192 | 1608 | 2024 |
| 12 | 208 | 440 | 680 | 904 | 1128 | 1352 | 1800 | 2280 |

Table 8 is a TBS table for NB-IoT uplink scheduling. *I*_{MCS} may be determined based on the MCS field in the DCI format N0, and *I*_{TBS} = *I*_{MCS}, so that a row index *I*_{TBS} in the table may be determined. *I*_{RU} may be determined based on the resource assignment field in the DCI format N0. When the quantity of TBs is greater than 1, *I*_{MCS} may only support 0 to 7, or *I*_{RU} may only support 0 to 3, so that a quantity of bits of at least one field in the MCS field or the resource assignment field in the DCI may be reduced by 1 bit.

**Table 8**

| *I*_{TBS} | *I*_{RU} | | | | | | | |
|---|---|---|---|---|---|---|---|---|
| | 0 | 1 | 2 | 3 | 4 | 5 | 6 | 7 |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |
| 5 | 72 | 144 | 224 | 328 | 424 | 504 | 680 | 872 |
| 6 | 88 | 176 | 256 | 392 | 504 | 600 | 808 | 1000 |
| 7 | 104 | 224 | 328 | 472 | 584 | 712 | 1000 | 1224 |
| 8 | 120 | 256 | 392 | 536 | 680 | 808 | 1096 | 1384 |
| 9 | 136 | 296 | 456 | 616 | 776 | 936 | 1256 | 1544 |
| 10 | 144 | 328 | 504 | 680 | 872 | 1000 | 1384 | 1736 |
| 11 | 176 | 376 | 584 | 776 | 1000 | 1192 | 1608 | 2024 |
| 12 | 208 | 440 | 680 | 1000 | 1128 | 1352 | 1800 | 2280 |

It may be understood that, in the foregoing embodiments, methods and/or steps implemented by the terminal device may also be implemented by a component (for example, a chip or a circuit) that can be used in the terminal device, and methods and/or steps implemented by the network device may also be implemented by a component that can be used in the network device.

The foregoing mainly describes the solutions provided in the embodiments of this application from a perspective of interaction between network elements. Correspondingly, an embodiment of this application further provides a communications apparatus. The communications apparatus is configured to implement the foregoing methods. The communications apparatus may be the terminal device in the foregoing method embodiments, or an apparatus including the foregoing terminal device, or a component that can be used in the terminal device. Alternatively, the communications apparatus may be the network device in the foregoing method embodiments, or an apparatus including the foregoing network device, or a component that can be used in the network device. It can be understood that, to implement the foregoing functions, the communications apparatus includes a corresponding hardware structure and/or software module for performing the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that such an implementation goes out of the scope of this application.

In the embodiments of this application, the communications apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example and is merely logical function division. During actual implementation, another division manner may be used.

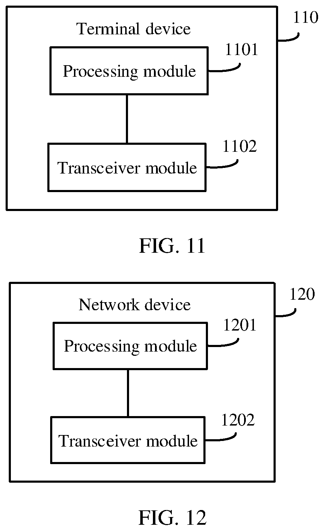

For example, the communications apparatus is the terminal device in the foregoing method embodiments. FIG. 11 is a schematic structural diagram of a terminal device 110. The terminal device 110 includes a processing module 1101 and a transceiver module 1102. The transceiver module 1102 may also be referred to as a transceiver unit, and is configured to implement a sending and/or receiving function, for example, may be a transceiver circuit, a transceiver machine, a transceiver, or a communications interface.

The processing module 1101 is configured to determine a quantity M of HARQ processes supported by a terminal device, where M is a positive integer. The transceiver module 1102 is configured to receive DCI from a network device, where the DCI includes a first field, the first field indicates a quantity N of TBs scheduled by the DCI, and N is a positive integer greater than 1. When determining that M=1, the processing module 1101 is further configured to receive or send, via the transceiver module 1102 in the HARQ process supported by the terminal device, an initially transmitted TB and/or a retransmitted TB in the N TBs scheduled by the DCI. Alternatively, when determining that M is greater than 1, and N is less than or equal to M, the processing module 1101 is further configured to receive or send, via the transceiver module 1102 in N HARQ processes in the M HARQ processes supported by the terminal device, the N TBs scheduled by the DCI, where each of the N HARQ processes corresponds to one TB in the N TBs.

In a possible implementation, if M=1, the DCI further includes a second field, where the second field indicates a transmission type of each of the TBs scheduled by the DCI. That the processing module 1101 is configured to receive or send, via the transceiver module 1102 in the HARQ process supported by the terminal device, an initially transmitted TB and/or a retransmitted TB in the N TBs scheduled by the DCI includes: The processing module 1101 is configured to receive or send, via the transceiver module 1102 based on the second field in the HARQ process supported by the terminal device, the retransmitted TB in the TBs scheduled by the DCI. Alternatively, the processing module 1101 is configured to receive or send, via the transceiver module 1102 based on the second field in the HARQ process supported by the terminal device, the N initially transmitted TBs scheduled by the DCI.

Optionally, each of bits occupied by the second field corresponds to one TB in the N TBs scheduled by the DCI, and is used to indicate a transmission type of the corresponding TB.

In another possible implementation, if M=1, the DCI further includes a third field, where the third field indicates an NDI corresponding to each of the N TBs scheduled by the DCI. That the processing module 1101 is configured to receive or send, via the transceiver module 1102 in the HARQ process supported by the terminal device, an initially transmitted TB and/or a retransmitted TB in the N TBs scheduled by the DCI includes: The processing module 1101 is configured to receive or send, via the transceiver module 1102 based on the third field in the HARQ process supported by the terminal device, the N TBs scheduled by the DCI.

Optionally, each of bits occupied by the third field corresponds to one TB in the N TBs scheduled by the DCI, and is used to indicate an NDI corresponding to the corresponding TB.

In still another possible implementation, if M is greater than 1, and N is less than or equal to M, the DCI further includes a fourth field, where the fourth field indicates an NDI corresponding to each of the N HARQ processes. That the processing module 1101 is configured to receive or send, via the transceiver module 1102 in N HARQ processes, the N TBs scheduled by DCI includes: The processing module 1101 is configured to receive or send, via the transceiver module 1102 based on the fourth field in the N HARQ processes, the N TBs scheduled by the DCI.

Optionally, each of bits occupied by the fourth field corresponds to one HARQ process in the N HARQ processes, and is used to indicate an NDI corresponding to the corresponding HARQ process.

All related content of the steps in the foregoing method embodiments may be cited in function descriptions of corresponding functional modules, and details are not described herein again.

In this embodiment, the terminal device 110 is presented in a form of functional modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the terminal device 110 may be in a form of the terminal device 40 shown in FIG. 3.

For example, the processor 401 in the terminal device 40 shown in FIG. 3 may invoke computer-executable instructions stored in the memory 402, to enable the terminal device 40 to perform the data scheduling method in the foregoing method embodiments.

Specifically, the processor 401 in the terminal device 40 shown in FIG. 3 may invoke the computer-executable instructions stored in the memory 402, to implement functions/implementation processes of the processing module 1101 and the transceiver module 1102 in FIG. 11. Alternatively, the processor 401 in the terminal device 40 shown in FIG. 3 may invoke the computer-executable instructions stored in the memory 402, to implement functions/implementation processes of the processing module 1101 in FIG. 11, and the transceiver 403 in the terminal device 40 shown in FIG. 3 may implement functions/implementation processes of the transceiver module 1102 in FIG. 11.

Because the terminal device 110 provided in this embodiment may perform the foregoing data scheduling method, for a technical effect that can be achieved by the terminal device 110, refer to the foregoing method embodiments. Details are not described herein again.

Alternatively, for example, the communications apparatus is the network device in the foregoing method embodiments. FIG. 12 is a schematic structural diagram of a network device 120. The network device 120 includes a processing module 1201 and a transceiver module 1202. The transceiver module 1202 may also be referred to as a transceiver unit, and is configured to implement a sending and/or receiving function, for example, may be a transceiver circuit, a transceiver machine, a transceiver, or a communications interface.

The processing module 1201 is configured to determine a quantity M of HARQ processes supported by a terminal device, where M is a positive integer. The transceiver module 1202 is configured to send DCI to the terminal device, where the DCI includes a first field, the first field indicates a quantity N of TBs scheduled by the DCI, and N is a positive integer greater than 1. When determining that M=1, the processing module 1201 is further configured to send or receive, via the transceiver module 1202 in the HARQ process supported by the terminal device, an initially transmitted TB and/or a retransmitted TB in the N TBs scheduled by the DCI. Alternatively, when determining that M is greater than 1, and N is less than or equal to M, the processing module 1201 is further configured to send or receive, via the transceiver module 1202 in N HARQ processes in the M HARQ processes supported by the terminal device, the N TBs scheduled by the DCI, where each of the N HARQ processes corresponds to one TB in the N TBs.

In a possible implementation, if M=1, the DCI further includes a second field, where the second field indicates a transmission type of each of the TBs scheduled by the DCI. That the processing module 1201 is configured to send or receive, via the transceiver module 1202 in the HARQ process supported by the terminal device, an initially transmitted TB and/or a retransmitted TB in the N TBs scheduled by the DCI includes: The processing module 1201 is configured to send or receive, via the transceiver module 1202 based on the second field in the HARQ process supported by the terminal device, the retransmitted TB in the TBs scheduled by the DCI. Alternatively, the processing module 1201 is configured to send or receive, via the transceiver module 1202 based on the second field in the HARQ process supported by the terminal device, the N initially transmitted TBs scheduled by the DCI.

Optionally, each of bits occupied by the second field corresponds to one TB in the N TBs scheduled by the DCI, and is used to indicate a transmission type of the corresponding TB.

In another possible implementation, if M=1, the DCI further includes a third field, where the third field indicates an NDI corresponding to each of the N TBs scheduled by the DCI. That the processing module 1201 is configured to send or receive, via the transceiver module 1202 in the HARQ process supported by the terminal device, an initially transmitted TB and/or a retransmitted TB in the N TBs scheduled by the DCI includes: The processing module 1201 is configured to send or receive, via the transceiver module 1202 based on the third field in the HARQ process supported by the terminal device, the N TBs scheduled by the DCI.

Optionally, each of bits occupied by the third field corresponds to one TB in the N TBs scheduled by the DCI, and is used to indicate an NDI corresponding to the corresponding TB.

In still another possible implementation, if M is greater than 1, and N is less than or equal to M, the DCI further includes a fourth field, where the fourth field indicates an NDI corresponding to each of the N HARQ processes. That the processing module 1201 is configured to send or receive, via the transceiver module 1202 in N HARQ processes, the N TBs scheduled by DCI includes: The processing module 1201 is configured to send or receive, via the transceiver module 1202 based on the fourth field in the N HARQ processes, the N TBs scheduled by the DCI.

Optionally, each of bits occupied by the fourth field corresponds to one HARQ process in the N HARQ processes, and is used to indicate an NDI corresponding to the corresponding HARQ process.

All related content of the steps in the foregoing method embodiments may be cited in function descriptions of corresponding functional modules, and details are not described herein again.

In this embodiment, the network device 120 is presented in a form of functional modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the network device 120 may be in a form of the network device 30 shown in FIG. 3.

For example, the processor 301 in the network device 30 shown in FIG. 3 may invoke computer-executable instructions stored in the memory 302, to enable the network device 30 to perform the data scheduling method in the foregoing method embodiments.

Specifically, the processor 301 in the network device 30 shown in FIG. 3 may invoke the computer-executable instructions stored in the memory 302, to implement functions/implementation processes of the processing module 1201 and the transceiver module 1202 in FIG. 12. Alternatively, the processor 301 in the network device 30 shown in FIG. 3 may invoke the computer-executable instructions stored in the memory 302, to implement functions/implementation processes of the processing module 1201 in FIG. 12, and the transceiver 303 in the network device 30 shown in FIG. 3 may implement functions/implementation processes of the transceiver module 1202 in FIG. 12.

Because the network device 120 provided in this embodiment may perform the foregoing data scheduling method, for a technical effect that can be achieved by the network device 120, refer to the foregoing method embodiments. Details are not described herein again.

Optionally, an embodiment of this application further provides a communications apparatus (for example, the communications apparatus may be a chip or a chip system). The communications apparatus includes a processor, configured to implement the method in any one of the foregoing method embodiments. In a possible design, the communications apparatus further includes a memory. The memory is configured to store necessary program instructions and necessary data. The processor may invoke program code stored in the memory, to instruct the communications apparatus to perform the method in any one of the foregoing method embodiments. Certainly, the communications apparatus may not include a memory. When the communications apparatus is a chip system, the communications apparatus may include a chip, or may include a chip and another discrete component. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. In the embodiments of this application, the computer may include the apparatuses described above.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data scheduling method, wherein the method comprises:
determining, by a terminal device, a quantity M of hybrid automatic repeat request HARQ processes supported by the terminal device, wherein M is a positive integer;
receiving, by the terminal device, downlink control information DCI from a network device, wherein the DCI comprises a first field, the first field indicates a quantity N of transport blocks TBs scheduled by the DCI, and N is a positive integer greater than 1; and
if M=1, receiving or sending, by the terminal device in the HARQ process supported by the terminal device, an initially transmitted TB and/or a retransmitted TB in the N TBs scheduled by the DCI; or
if M is greater than 1, and N is less than or equal to M, receiving or sending, by the terminal device in N HARQ processes in the M HARQ processes supported by the terminal device, the N TBs scheduled by the DCI, wherein each of the N HARQ processes corresponds to one TB in the N TBs.

2. The method according to claim 1, wherein if M=1, the DCI further comprises a second field, and the second field indicates a transmission type of each of the TBs scheduled by the DCI; and
the receiving or sending, by the terminal device in the HARQ process supported by the terminal device, an initially transmitted TB and/or a retransmitted TB in the N TBs scheduled by the DCI comprises:
receiving or sending, by the terminal device based on the second field in the HARQ process supported by the terminal device, the retransmitted TB in the TBs scheduled by the DCI; or
receiving or sending, by the terminal device based on the second field in the HARQ process supported by the terminal device, the N initially transmitted TBs scheduled by the DCI.

3. The method according to claim 2, wherein each of bits occupied by the second field corresponds to one TB in the N TBs scheduled by the DCI, and is used to indicate a transmission type of the corresponding TB.

4. The method according to claim 1, wherein if M=1, the DCI further comprises a third field, and the third field indicates a new data indicator NDI corresponding to each of the N TBs scheduled by the DCI; and
the receiving or sending, by the terminal device in the HARQ process supported by the terminal device, an initially transmitted TB and/or a retransmitted TB in the N TBs scheduled by the DCI comprises:
receiving or sending, by the terminal device based on the third field in the HARQ process supported by the terminal device, the N TBs scheduled by the DCI.

5. The method according to claim 4, wherein each of bits occupied by the third field corresponds to one TB in the N TBs scheduled by the DCI, and is used to indicate an NDI corresponding to the corresponding TB.

6. The method according to claim 1, wherein if M is greater than 1, and N is less than or equal to M, the DCI further comprises a fourth field, and the fourth field indicates an NDI corresponding to each of the N HARQ processes; and
the receiving or sending, by the terminal device in the N HARQ processes, the N TBs scheduled by the DCI comprises:
receiving or sending, by the terminal device based on the fourth field in the N HARQ processes, the N TBs scheduled by the DCI.

7. The method according to claim 6, wherein each of bits occupied by the fourth field corresponds to one HARQ process in the N HARQ processes, and is used to indicate an NDI corresponding to the corresponding HARQ process.

8. A data scheduling method, wherein the method comprises:
determining, by a network device, a quantity M of hybrid automatic repeat request HARQ processes supported by a terminal device, wherein M is a positive integer;
sending, by the network device, downlink control information DCI to the terminal device, wherein the DCI comprises a first field, the first field indicates a quantity N of transport blocks TBs scheduled by the DCI, and N is a positive integer greater than 1; and
if M=1, sending or receiving, by the network device in the HARQ process supported by the terminal device, an initially transmitted TB and/or a retransmitted TB in the N TBs scheduled by the DCI; or
if M is greater than 1, and N is less than or equal to M, sending or receiving, by the network device in N HARQ processes in the M HARQ processes supported by the terminal device, the N TBs scheduled by the DCI, wherein each of the N HARQ processes corresponds to one TB in the N TBs.

9. The method according to claim 8, wherein if M=1, the DCI further comprises a second field, and the second field indicates a transmission type of each of the TBs scheduled by the DCI; and
the sending or receiving, by the network device in the HARQ process supported by the terminal device, an initially transmitted TB and/or a retransmitted TB in the N TBs scheduled by the DCI comprises:
sending or receiving, by the network device based on the second field in the HARQ process supported by the terminal device, the retransmitted TB in the TBs scheduled by the DCI; or
sending or receiving, by the network device based on the second field in the HARQ process supported by the terminal device, the N initially transmitted TBs scheduled by the DCI.

10. The method according to claim 9, wherein each of bits occupied by the second field corresponds to one TB in the N TBs scheduled by the DCI, and is used to indicate a transmission type of the corresponding TB.

11. The method according to claim 8, wherein if M=1, the DCI further comprises a third field, and the third field indicates a new data indicator NDI corresponding to each of the N TBs scheduled by the DCI; and
the sending or receiving, by the network device in the HARQ process supported by the terminal device, an initially transmitted TB and/or a retransmitted TB in the N TBs scheduled by the DCI comprises:
sending or receiving, by the network device based on the third field in the HARQ process supported by the terminal device, the N TBs scheduled by the DCI.

12. The method according to claim 11, wherein each of bits occupied by the third field corresponds to one TB in the N TBs scheduled by the DCI, and is used to indicate an NDI corresponding to the corresponding TB.

13. The method according to claim 8, wherein if M is greater than 1, and N is less than or equal to M, the DCI further comprises a fourth field, and the fourth field indicates an NDI corresponding to each of the N HARQ processes; and
the sending or receiving, by the network device in the N HARQ processes, the N TBs scheduled by the DCI comprises:
sending or receiving, by the network device based on the fourth field in the N HARQ processes, the N TBs scheduled by the DCI.

14. The method according to claim 13, wherein each of bits occupied by the fourth field corresponds to one HARQ process in the N HARQ processes, and is used to indicate an NDI corresponding to the corresponding HARQ process.

15. A communications apparatus, wherein the communications apparatus comprises a processing module and a transceiver module, wherein
the processing module is configured to determine a quantity M of hybrid automatic repeat request HARQ processes supported by a terminal device, wherein M is a positive integer;
the transceiver module is configured to receive downlink control information DCI from a network device, wherein the DCI comprises a first field, the first field indicates a quantity N of transport blocks TBs scheduled by the DCI, and N is a positive integer greater than 1; and
when determining that M=1, the processing module is further configured to receive or send, via the transceiver module in the HARQ process supported by the terminal device, an initially transmitted TB and/or a retransmitted TB in the N TBs scheduled by the DCI; or
when determining that M is greater than 1, and N is less than or equal to M, the processing module is further configured to receive or send, via the transceiver module in N HARQ processes in the M HARQ processes supported by the terminal device, the N TBs scheduled by the DCI, wherein each of the N HARQ processes corresponds to one TB in the N TBs.

16. The communications apparatus according to claim 15, wherein if M=1, the DCI further comprises a second field, and the second field indicates a transmission type of each of the TBs scheduled by the DCI; and
that the processing module is configured to receive or send, via the transceiver module in the HARQ process supported by the terminal device, an initially transmitted TB and/or a retransmitted TB in the N TBs scheduled by the DCI comprises:
the processing module is configured to receive or send, via the transceiver module based on the second field in the HARQ process supported by the terminal device, the retransmitted TB in the TBs scheduled by the DCI; or
the processing module is configured to receive or send, via the transceiver module based on the second field in the HARQ process supported by the terminal device, the N initially transmitted TBs scheduled by the DCI.

17. The communications apparatus according to claim 16, wherein each of bits occupied by the second field corresponds to one TB in the N TBs scheduled by the DCI, and is used to indicate a transmission type of the corresponding TB.

18. The communications apparatus according to claim 15, wherein if M=1, the DCI further comprises a third field, and the third field indicates a new data indicator NDI corresponding to each of the N TBs scheduled by the DCI; and
that the processing module is configured to receive or send, via the transceiver module in the HARQ process supported by the terminal device, an initially transmitted TB and/or a retransmitted TB in the N TBs scheduled by the DCI comprises:
the processing module is configured to receive or send, via the transceiver module based on the third field in the HARQ process supported by the terminal device, the N TBs scheduled by the DCI.

19. The communications apparatus according to claim 18, wherein each of bits occupied by the third field corresponds to one TB in the N TBs scheduled by the DCI, and is used to indicate an NDI corresponding to the corresponding TB.

20. The communications apparatus according to claim 15, wherein if M is greater than 1, and N is less than or equal to M, the DCI further comprises a fourth field, and the fourth field indicates an NDI corresponding to each of the N HARQ processes; and
that the processing module is configured to receive or send, via the transceiver module in the N HARQ processes, the N TBs scheduled by the DCI comprises:
the processing module is configured to receive or send, via the transceiver module based on the fourth field in the N HARQ processes, the N TBs scheduled by the DCI.

21. The communications apparatus according to claim 20, wherein each of bits occupied by the fourth field corresponds to one HARQ process in the N HARQ processes, and is used to indicate an NDI corresponding to the corresponding HARQ process.

22. A communications apparatus, wherein the communications apparatus comprises a processing module and a transceiver module, wherein
the processing module is configured to determine a quantity M of hybrid automatic repeat request HARQ processes supported by a terminal device, wherein M is a positive integer;
the transceiver module is configured to send downlink control information DCI to the terminal device, wherein the DCI comprises a first field, the first field indicates a quantity N of transport blocks TBs scheduled by the DCI, and N is a positive integer greater than 1; and
when determining that M=1, the processing module is further configured to send or receive, via the transceiver module in the HARQ process supported by the terminal device, an initially transmitted TB and/or a retransmitted TB in the N TBs scheduled by the DCI; or
when determining that M is greater than 1, and N is less than or equal to M, the processing module is further configured to send or receive, via the transceiver module in N HARQ processes in the M HARQ processes supported by the terminal device, the N TBs scheduled by the DCI, wherein each of the N HARQ processes corresponds to one TB in the N TBs.

23. The communications apparatus according to claim 22, wherein if M=1, the DCI further comprises a second field, and the second field indicates a transmission type of each of the TBs scheduled by the DCI; and
that the processing module is configured to send or receive, via the transceiver module in the HARQ process supported by the terminal device, an initially transmitted TB and/or a retransmitted TB in the N TBs scheduled by the DCI comprises:
the processing module is configured to send or receive, via the transceiver module based on the second field in the HARQ process supported by the terminal device, the retransmitted TB in the TBs scheduled by the DCI; or
the processing module is configured to send or receive, via the transceiver module based on the second field in the HARQ process supported by the terminal device, the N initially transmitted TBs scheduled by the DCI.

24. The communications apparatus according to claim 23, wherein each of bits occupied by the second field corresponds to one TB in the N TBs scheduled by the DCI, and is used to indicate a transmission type of the corresponding TB.

25. The communications apparatus according to claim 22, wherein if M=1, the DCI further comprises a third field, and the third field indicates a new data indicator NDI corresponding to each of the N TBs scheduled by the DCI; and
that the processing module is configured to send or receive, via the transceiver module in the HARQ process supported by the terminal device, an initially transmitted TB and/or a retransmitted TB in the N TBs scheduled by the DCI comprises:
the processing module is configured to send or receive, via the transceiver module based on the third field in the HARQ process supported by the terminal device, the N TBs scheduled by the DCI.

26. The communications apparatus according to claim 25, wherein each of bits occupied by the third field corresponds to one TB in the N TBs scheduled by the DCI, and is used to indicate an NDI corresponding to the corresponding TB.

27. The communications apparatus according to claim 21, wherein if M is greater than 1, and N is less than or equal to M, the DCI further comprises a fourth field, and the fourth field indicates an NDI corresponding to each of the N HARQ processes; and
that the processing module is configured to send or receive, via the transceiver module in the N HARQ processes, the N TBs scheduled by the DCI comprises:
the processing module is configured to send or receive, via the transceiver module based on the fourth field in the N HARQ processes, the N TBs scheduled by the DCI.

28. The communications apparatus according to claim 27, wherein each of bits occupied by the fourth field corresponds to one HARQ process in the N HARQ processes, and is used to indicate an NDI corresponding to the corresponding HARQ process.

29. The method or the communications apparatus according to any one of claims 1 to 28, wherein the DCI is used for uplink scheduling; and the DCI further comprises a fifth field, wherein the fifth field is used to indicate a first redundancy version corresponding to the retransmitted TB.

30. The method or the communications apparatus according to claim 29, wherein a redundancy version corresponding to the initially transmitted TB is a specified second redundancy version, and the first redundancy version is different from the second redundancy version.

31. The method or the communications apparatus according to any one of claims 1 to 28, wherein the DCI is used for uplink scheduling;
a redundancy version corresponding to the retransmitted TB is a specified first redundancy version; and
a redundancy version corresponding to the initially transmitted TB is a specified second redundancy version, and the first redundancy version is different from the second redundancy version.

32. The method or the communications apparatus according to any one of claims 1 to 31, wherein the DCI further comprises a sixth field and a seventh field, the sixth field is used to indicate scheduling resource assignment, and the seventh field is used to indicate a modulation order; and
if M=1, the sixth field occupies X1 bits, and the seventh field occupies Y1 bits; or if M is greater than 1, and N is less than or equal to M, the sixth field occupies X2 bits, and the seventh field occupies Y2 bits, wherein X1 is less than X2, and Y1 is equal to Y2; X1 is equal to X2, and Y1 is less than Y2; or X1 is less than X2, and Y1 is less than Y2; and X1, X2, Y1, and Y2 are all positive integers.
